# EUROPEAN PATENT APPLICATION

(11) **EP 4 661 510 A1**
(43) Date of publication of application: **10.12.2025**
(21) Application number: 23922447.0
(22) Date of filing: 30.11.2023
(51) Int. Cl.: H04W 52/02

(54) **DISCONTINUOUS RECEPTION METHOD, DEVICE, AND READABLE STORAGE MEDIUM**

(30) Priority: 16.02.2023 CN 202310166649
(71) Applicant: Huawei Technologies Co., Ltd., Shenzhen, Guangdong 518129 (CN)
(72) Inventor: HU, Jinna, Shenzhen, Guangdong 518129 (CN); MA, Chuan, Shenzhen, Guangdong 518129 (CN)
(74) Representative: Goddar, Heinz J.
(86) International application number: PCT/CN2023/135658
(87) International publication number: WO 2024/169331

(57) **Abstract**

Embodiments of this application relate to the field of communication technologies, and provide a discontinuous reception method, a device, and a readable storage medium. The discontinuous reception method is applied to a terminal device. The method includes: obtaining first information and a running state of a C-DRX-related timer, where the first information indicates a cell DTX state of a serving cell of the terminal device, and the C-DRX-related timer is configured to determine whether the terminal device enters a C-DRX active period (S901); and when the first information indicates that the DTX state of the serving cell is an inactive period state, performing a first operation, where the first operation indicates the terminal device to enter a C-DRX sleep period or is used to change the running state of the C-DRX-related timer (S902). The cell DTX state is taken into consideration for whether the terminal device enters the C-DRX sleep period, thereby avoiding an invalid monitoring of a PDCCH performed by the terminal device when the cell DTX state is the inactive period state, and reducing energy consumption.

## Description

This application claims priority to Chinese Patent Application No. 202310166649.X, filed with the China National Intellectual Property Administration on February 16, 2023 and entitled "DISCONTINUOUS RECEPTION METHOD, DEVICE, AND READABLE STORAGE MEDIUM", which is incorporated herein by reference in its entirety.

### TECHNICAL FIELD

Embodiments of this application relate to the field of communication technologies, and in particular, to a discontinuous reception method, a device, and a readable storage medium.

### BACKGROUND

With development of mobile communication and terminal technologies, the variety of types of terminal devices and service types are increasing, leading to a continuous rise in network energy consumption and terminal energy consumption in mobile communication. How to reduce energy consumption is an urgent problem to be resolved.

Currently, a cell discontinuous transmission (discontinuous transmission, DTX) technology enables a network device to periodically perform downlink transmission with a terminal device in specified time periods, and stop downlink transmission in other time periods, thereby achieving network energy saving. A connected discontinuous reception (connected discontinuous reception, C-DRX) technology allows a terminal device to cyclically enter a sleep mode (sleep mode). While in the sleep mode, the terminal device does not monitor a physical downlink control channel (physical downlink control channel, PDCCH); while in a wake-up state, the terminal device monitors the PDCCH, thus achieving terminal energy saving.

In scenarios in which cell DTX is active and the terminal device is configured with C-DRX, the terminal device still performs unnecessary monitoring of the PDCCH, resulting in high energy consumption of the terminal device.

### SUMMARY

This application provides a discontinuous reception method, a device, and a readable storage medium, to reduce energy consumption of a terminal device.

According to a first aspect, this application provides a discontinuous reception method, applied to a terminal device. The method includes: obtaining first information and a running state of a C-DRX-related timer, where the first information indicates a cell DTX state of a serving cell of the terminal device, and the C-DRX-related timer is configured to determine whether the terminal device enters a C-DRX active period; and when the first information indicates that the DTX state of the serving cell is an inactive period state, performing a first operation, where the first operation indicates the terminal device to enter a C-DRX sleep period or is used to change the running state of the C-DRX-related timer.

In the foregoing manner, whether the terminal device enters the C-DRX sleep period need to consider the cell DTX state. When the cell DTX state is the inactive period state, to avoid an unnecessary action of monitoring a PDCCH by the terminal device, the terminal device is to enter the C-DRX sleep period, or the running state of the C-DRX-related timer is changed to determine that the terminal device enters the C-DRX sleep period, so as to reduce terminal energy consumption.

In a possible design, the first operation includes any one of the following: the terminal device enters the C-DRX sleep period; the terminal device skips monitoring scheduling information of a PDCCH; stopping a running first C-DRX timer; suspending a running second C-DRX timer; and when a C-DRX hybrid automatic repeat request round trip time timer stops, skipping starting or skipping restarting a C-DRX retransmission timer.

In the foregoing manner, the terminal device directly enters the C-DRX sleep period, or the terminal device directly skips monitoring the scheduling information of the PDCCH. This can reduce energy consumption, and has a simple implementation. The terminal device stops running of the running first C-DRX timer, suspends running of the running second C-DRX timer, or skips starting or skips restarting the C-DRX retransmission timer. The running state of the C-DRX-related timer is changed, so that it is ensured that, in a C-DRX technology, the terminal device determines, based on the running state of the C-DRX-related timer, whether to enter the C-DRX sleep period, a determining mechanism remains unchanged, and energy consumption is reduced.

In a possible design, the first operation is stopping the running first C-DRX timer. The method further includes: when the first information indicates that the DTX state of the serving cell changes from the inactive period state to an active period state, starting or restarting the first C-DRX timer.

In the foregoing manner, in a scenario in which the first C-DRX timer stops running because the DTX state of the serving cell of the terminal device is the inactive period state, or the DTX state of the serving cell is not the active period state, or a cell DTX on-duration timer stops running, when the first information indicates that the DTX state of the serving cell changes from the inactive period state to the active period state, or when the cell DTX on-duration timer is running, the first C-DRX timer may be started or restarted. In this way, time for the terminal device to monitor the scheduling information of the PDCCH is extended, to ensure data transmission and improve service quality.

In a possible design, the first operation is suspending the running second C-DRX timer. The method further includes: when the first information indicates that the DTX state of the serving cell changes from the inactive period state to an active period state, continuing to run the suspended second C-DRX timer.

In the foregoing manner, in a scenario in which the second C-DRX timer stops running because the DTX state of the serving cell of the terminal device is the inactive period state, or the DTX state of the serving cell is not the active period state, or a cell DTX on-duration timer stops running, when the first information indicates that the DTX state of the serving cell changes from the inactive period state to the active period state, or when the cell DTX on-duration timer is running, the second C-DRX timer may continue to run. In this way, time for the terminal device to monitor the scheduling information of the PDCCH is extended, to ensure data transmission and improve service quality.

In a possible design, the first C-DRX timer includes at least one of the following: a C-DRX on-duration timer, a C-DRX inactivity timer, or a C-DRX retransmission timer.

In a possible design, the second C-DRX timer is a C-DRX inactivity timer or a C-DRX retransmission timer.

In a possible design, the first operation is: when the C-DRX hybrid automatic repeat request round trip time timer stops, skipping starting or skipping restarting the C-DRX retransmission timer. The method further includes: when the first information indicates that the DTX state of the serving cell changes from the inactive period state to an active period state, starting or restarting the C-DRX retransmission timer.

In the foregoing manner, in a scenario in which the C-DRX retransmission timer is not started or restarted because the DTX state of the serving cell of the terminal device is the inactive period state, or the DTX state of the serving cell is not the active period state, or a cell DTX on-duration timer stops running, when the first information indicates that the DTX state of the serving cell changes from the inactive period state to the active period state, or when the cell DTX on-duration timer is running, the C-DRX retransmission timer may be started or restarted. In this way, time for the terminal device to monitor the scheduling information of the PDCCH is extended, to ensure data transmission and improve service quality.

In a possible design, the obtaining the first information includes: determining, based on cell DTX configuration information, whether a cell DTX on-duration timer is running, and/or determining whether DTX of the serving cell is in an inactive period, and/or determining whether DTX of the serving cell is in an active period, to obtain the first information.

In a possible design, the first information is that the cell DTX on-duration timer of the serving cell stops running, cell DTX of the serving cell is in the inactive period, or cell DTX of the serving cell is not in the active period, to indicate that the DTX state of the serving cell is the inactive period state. Alternatively, the first information is that the cell DTX on-duration timer of the serving cell is running, cell DTX of the serving cell is in the active period, or cell DTX of the serving cell is not in the inactive period, to indicate that the DTX state of the serving cell is the active period state.

In a possible design, the method further includes: when the first information indicates that the DTX state of the serving cell is the active period state, determining, based on the running state of the C-DRX-related timer, whether the terminal device enters the C-DRX sleep period.

In the foregoing manner, when the first information indicates that the DTX state of the serving cell is the active period state, a network device performs downlink transmission in the serving cell. During this period, if the terminal device monitors the PDCCH, an action of monitoring the PDCCH by the terminal device is a valid action. The terminal device determines, based on the DTX state of the serving cell and the running state of the C-DRX-related timer, whether the terminal device enters the C-DRX sleep period, to reduce terminal energy consumption.

According to a second aspect, this application provides a discontinuous reception method, applied to a network device. The method includes: obtaining first information and a running state of a C-DRX-related timer corresponding to a terminal device, where the first information indicates a cell DTX state of a serving cell of the terminal device, and the C-DRX-related timer corresponding to the terminal device is configured to determine whether the terminal device enters a C-DRX active period; and when the first information indicates that the DTX state of the serving cell is an inactive period state, performing a first operation, where the first operation indicates the terminal device to enter a C-DRX sleep period or is used to change the running state of the C-DRX-related timer corresponding to the terminal device.

In a possible design, the first operation includes any one of the following: the terminal device enters the C-DRX sleep period; the terminal device skips monitoring scheduling information of a physical downlink control channel PDCCH; stopping a running first C-DRX timer corresponding to the terminal device; suspending a running second C-DRX timer corresponding to the terminal device; and when a C-DRX hybrid automatic repeat request round trip time timer corresponding to the terminal device stops, skipping starting or skipping restarting a C-DRX retransmission timer corresponding to the terminal device.

In a possible design, the first operation is stopping the running first C-DRX timer corresponding to the terminal device. The method further includes: when the first information indicates that the DTX state of the serving cell changes from the inactive period state to an active period state, starting or restarting the first C-DRX timer corresponding to the terminal device.

In a possible design, the first operation is suspending the running second C-DRX timer corresponding to the terminal device. The method further includes: when the first information indicates that the DTX state of the serving cell changes from the inactive period state to an active period state, continuing to run the suspended second C-DRX timer corresponding to the terminal device.

In a possible design, the first C-DRX timer includes at least one of the following: a C-DRX on-duration timer, a C-DRX inactivity timer, or a C-DRX retransmission timer.

In a possible design, the second C-DRX timer is a C-DRX inactivity timer or a C-DRX retransmission timer.

In a possible design, the first operation is: when the C-DRX hybrid automatic repeat request round trip time timer corresponding to the terminal device stops, skipping starting or skipping restarting the C-DRX retransmission timer corresponding to the terminal device. The method further includes: when the first information indicates that the DTX state of the serving cell changes from the inactive period state to an active period state, starting or restarting the C-DRX retransmission timer corresponding to the terminal device.

In a possible design, the obtaining the first information includes: determining, based on cell DTX configuration information, whether a cell DTX on-duration timer of the serving cell is running, and/or determining whether DTX of the serving cell is in an inactive period, and/or determining whether DTX of the serving cell is in an active period, to obtain the first information.

In a possible design, the first information is that the cell DTX on-duration timer of the serving cell stops running, cell DTX of the serving cell is in the inactive period, or cell DTX of the serving cell is not in the active period, to indicate that the DTX state of the serving cell is the inactive period state. Alternatively, the first information is that the cell DTX on-duration timer of the serving cell is running, cell DTX of the serving cell is in the active period, or cell DTX of the serving cell is not in the inactive period, to indicate that the DTX state of the serving cell is the active period state.

In a possible design, the method further includes: when the first information indicates that the DTX state of the serving cell is the active period state, determining, based on the running state of the C-DRX-related timer corresponding to the terminal device, whether the terminal device enters the C-DRX sleep period.

According to a third aspect, this application provides a terminal device. The terminal device includes: an obtaining module, configured to obtain first information and a running state of a C-DRX-related timer, where the first information indicates a cell DTX state of a serving cell of the terminal device, and the C-DRX-related timer is configured to determine whether the terminal device enters a C-DRX active period; and a processing module, configured to: when the first information indicates that the DTX state of the serving cell is an inactive period state, perform a first operation, where the first operation indicates the terminal device to enter a C-DRX sleep period or is used to change the running state of the C-DRX-related timer.

In a possible implementation, the first operation includes any one of the following: the terminal device enters the C-DRX sleep period; the terminal device skips monitoring scheduling information of a PDCCH; stopping a running first C-DRX timer; suspending a running second C-DRX timer; and when a C-DRX hybrid automatic repeat request round trip time timer stops, skipping starting or skipping restarting a C-DRX retransmission timer.

In a possible implementation, the first operation is stopping the running first C-DRX timer. The processing module is further configured to: when the first information indicates that the DTX state of the serving cell changes from the inactive period state to an active period state, start or restart the first C-DRX timer.

In a possible implementation, the first operation is suspending the running second C-DRX timer. The processing module is further configured to: when the first information indicates that the DTX state of the serving cell changes from the inactive period state to an active period state, continue to run the suspended second C-DRX timer.

In a possible implementation, the first C-DRX timer includes at least one of the following: a C-DRX on-duration timer, a C-DRX inactivity timer, or a C-DRX retransmission timer.

In a possible implementation, the second C-DRX timer is a C-DRX inactivity timer or a C-DRX retransmission timer.

In a possible implementation, the first operation is: when the C-DRX hybrid automatic repeat request round trip time timer stops, skipping starting or skipping restarting the C-DRX retransmission timer. The processing module is further configured to: when the first information indicates that the DTX state of the serving cell changes from the inactive period state to an active period state, start or restart the C-DRX retransmission timer.

In a possible implementation, the obtaining module is configured to: determine, based on cell DTX configuration information, whether a cell DTX on-duration timer is running, and/or determine whether DTX of the serving cell is in an inactive period, and/or determine whether DTX of the serving cell is in an active period, to obtain the first information.

In a possible implementation, the first information is that the cell DTX on-duration timer of the serving cell stops running, cell DTX of the serving cell is in the inactive period, or cell DTX of the serving cell is not in the active period, to indicate that the DTX state of the serving cell is the inactive period state. Alternatively, the first information is that the cell DTX on-duration timer of the serving cell is running, cell DTX of the serving cell is in the active period, or cell DTX of the serving cell is not in the inactive period, to indicate that the DTX state of the serving cell is the active period state.

In a possible implementation, the processing module is further configured to: when the first information indicates that the DTX state of the serving cell is the active period state, determine, based on the running state of the C-DRX-related timer, whether the terminal device enters the C-DRX sleep period.

According to a fourth aspect, this application provides a network device. The network device includes: an obtaining module, configured to obtain first information and a running state of a C-DRX-related timer corresponding to a terminal device, where the first information indicates a cell DTX state of a serving cell of the terminal device, and the C-DRX-related timer corresponding to the terminal device is configured to determine whether the terminal device enters a C-DRX active period; and a processing module, configured to: when the first information indicates that the DTX state of the serving cell is an inactive period state, perform a first operation, where the first operation indicates the terminal device to enter a C-DRX sleep period or is used to change the running state of the C-DRX-related timer corresponding to the terminal device.

In a possible implementation, the first operation includes any one of the following: the terminal device enters the C-DRX sleep period; the terminal device skips monitoring scheduling information of a physical downlink control channel PDCCH; stopping a running first C-DRX timer corresponding to the terminal device; suspending a running second C-DRX timer corresponding to the terminal device; and when a C-DRX hybrid automatic repeat request round trip time timer corresponding to the terminal device stops, skipping starting or skipping restarting a C-DRX retransmission timer corresponding to the terminal device.

In a possible implementation, the first operation is stopping the running first C-DRX timer corresponding to the terminal device. The processing module is further configured to: when the first information indicates that the DTX state of the serving cell changes from the inactive period state to an active period state, start or restart the first C-DRX timer corresponding to the terminal device.

In a possible implementation, the first operation is suspending the running second C-DRX timer corresponding to the terminal device. The processing module is further configured to: when the first information indicates that the DTX state of the serving cell changes from the inactive period state to an active period state, continue to run the suspended second C-DRX timer corresponding to the terminal device.

In a possible implementation, the first C-DRX timer includes at least one of the following: a C-DRX on-duration timer, a C-DRX inactivity timer, or a C-DRX retransmission timer.

In a possible implementation, the second C-DRX timer is a C-DRX inactivity timer or a C-DRX retransmission timer.

In a possible implementation, the first operation is: when the C-DRX hybrid automatic repeat request round trip time timer corresponding to the terminal device stops, skipping starting or skipping restarting the C-DRX retransmission timer corresponding to the terminal device. The processing module is further configured to: when the first information indicates that the DTX state of the serving cell changes from the inactive period state to an active period state, start or restart the C-DRX retransmission timer corresponding to the terminal device.

In a possible implementation, the obtaining module is configured to: determine, based on cell DTX configuration information, whether a cell DTX on-duration timer of the serving cell is running, and/or determine whether DTX of the serving cell is in an inactive period, and/or determine whether DTX of the serving cell is in an active period, to obtain the first information.

In a possible implementation, the first information is that the cell DTX on-duration timer of the serving cell stops running, cell DTX of the serving cell is in the inactive period, or cell DTX of the serving cell is not in the active period, to indicate that the DTX state of the serving cell is the inactive period state. Alternatively, the first information is that the cell DTX on-duration timer of the serving cell is running, cell DTX of the serving cell is in the active period, or cell DTX of the serving cell is not in the inactive period, to indicate that the DTX state of the serving cell is the active period state.

In a possible implementation, the processing module is further configured to: when the first information indicates that the DTX state of the serving cell is the active period state, determine, based on the running state of the C-DRX-related timer corresponding to the terminal device, whether the terminal device enters the C-DRX sleep period.

According to a fifth aspect, a communication apparatus is provided. The communication apparatus may be the terminal device in the foregoing method embodiments or a chip disposed in the terminal device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the terminal device in the foregoing method embodiments.

According to a sixth aspect, a communication apparatus is provided. The communication apparatus may be the network device in the foregoing method embodiments or a chip disposed in the network device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the network device in the foregoing method embodiments.

According to a seventh aspect, a computer program product is provided. The computer program product includes computer program code. When the computer program code is run, the method performed by the terminal device in the foregoing aspects is performed.

According to an eighth aspect, a computer program product is provided. The computer program product includes computer program code. When the computer program code is run, the method performed by the network device in the foregoing aspects is performed.

According to a ninth aspect, this application provides a chip system. The chip system includes a processor, configured to implement a function of the terminal device in the method in the foregoing aspects. In a possible design, the chip system further includes a memory, configured to store program instructions and/or data. The chip system may include a chip, or may include a chip and another discrete component.

According to a tenth aspect, this application provides a chip system. The chip system includes a processor, configured to implement a function of the network device in the method in the foregoing aspects. In a possible design, the chip system further includes a memory, configured to store program instructions and/or data. The chip system may include a chip, or may include a chip and another discrete component.

According to an eleventh aspect, this application provides a computer-readable storage medium. The computer-readable storage medium stores a computer program. When the computer program is run, the method performed by the terminal device in the foregoing aspects is implemented.

According to a twelfth aspect, this application provides a computer-readable storage medium. The computer-readable storage medium stores a computer program. When the computer program is run, the method performed by the network device in the foregoing aspects is implemented.

According to a thirteenth aspect, this application provides a communication system. The system includes a terminal device and a network device. The terminal device is configured to implement a function of the terminal device in the method in the first aspect, and the network device is configured to implement a function of the network device in the method in the second aspect.

### BRIEF DESCRIPTION OF DRAWINGS

FIG. 1 is a diagram of an architecture of a wireless communication system according to an embodiment of this application;
FIG. 2 is a diagram of a cell DTX cycle configuration according to an embodiment of this application;
FIG. 3 is a message flowchart of configuring cell DTX configuration information according to an embodiment of this application;
FIG. 4 is a diagram of a C-DRX cycle configuration according to an embodiment of this application;
FIG. 5 is a message flowchart of configuring C-DRX configuration information according to an embodiment of this application;
FIG. 6 is a diagram of a principle of a C-DRX on-duration timer according to an embodiment of this application;
FIG. 7 is a diagram of a principle of a C-DRX inactivity timer according to an embodiment of this application;
FIG. 8 is a diagram of a principle of a C-DRX hybrid automatic repeat request round trip time timer and a C-DRX retransmission timer according to an embodiment of this application;
FIG. 9 is a flowchart of a discontinuous reception method according to an embodiment of this application;
FIG. 10 is another flowchart of a discontinuous reception method according to an embodiment of this application;
FIG. 11A and FIG. 11B are a set of diagrams related to a C-DRX on-duration timer according to an embodiment of this application;
FIG. 12A and FIG. 12B are a set of diagrams related to a C-DRX inactivity timer according to an embodiment of this application;
FIG. 13A to FIG. 13C are a set of diagrams related to a C-DRX retransmission timer according to an embodiment of this application;
FIG. 14 is a diagram of a structure of a terminal device according to an embodiment of this application;
FIG. 15 is a diagram of a structure of a network device according to an embodiment of this application;
FIG. 16 is a diagram of another structure of a terminal device according to an embodiment of this application; and
FIG. 17 is a diagram of another structure of a network device according to an embodiment of this application.

### DESCRIPTION OF EMBODIMENTS

To make objectives, technical solutions, and advantages of this application clearer, the following further describes this application in detail with reference to the accompanying drawings. A specific operation method, a function description, and the like in a method embodiment may also be applied to an apparatus embodiment or a system embodiment.

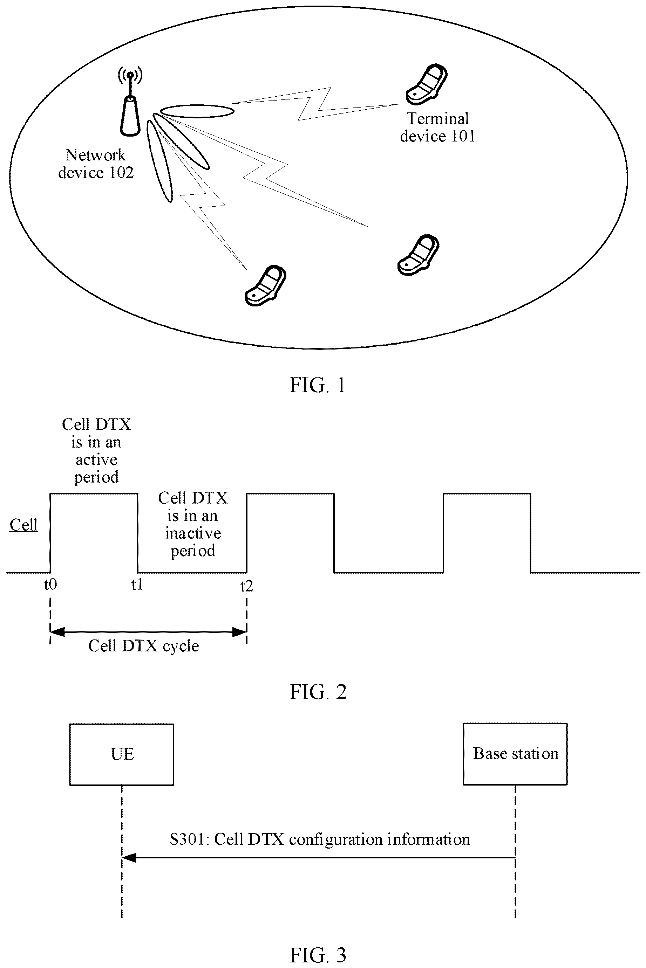

As shown in FIG. 1, a discontinuous reception method provided in embodiments of this application may be applied to a wireless communication system. The wireless communication system may include a terminal device 101 and a network device 102.

It should be understood that the foregoing wireless communication system is applied to both a low-frequency scenario (sub 6G) and a high-frequency scenario (above 6G). An application scenario of the wireless communication system includes but is not limited to an existing communication system, for example, a 5th generation (5G) system or a new radio (new radio, NR) communication system, a future evolved public land mobile network (public land mobile network, PLMN) system, or the like.

The foregoing terminal device 101 may be user equipment (user equipment, UE), a terminal (terminal), an access terminal, a terminal unit, a terminal station, a mobile station (mobile station, MS), a remote station, a remote terminal, a mobile terminal (mobile terminal), a wireless communication device, a terminal agent, a terminal device, or the like. The terminal device 101 may alternatively be a communication chip having a communication module, or may be a vehicle having a communication function, or a vehicle-mounted device (for example, a vehicle-mounted communication apparatus or a vehicle-mounted communication chip), or the like. The terminal device 101 may have a wireless transceiver function, can perform communication (for example, wireless communication) with one or more network devices in one or more communication systems, and accepts a network service provided by the network device. The network device herein includes but is not limited to the network device 102 shown in the figure.

The terminal device 101 may be a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device or another processing device connected to a wireless modem, a vehicle-mounted device, a wearable device, a terminal apparatus in a future 5G network, a terminal apparatus in a further evolved PLMN network, or the like.

The terminal device 101 may be specifically a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like.

In addition, the terminal device 101 may be deployed on land, including an indoor or outdoor device, or a handheld or vehicle-mounted device, the terminal device 101 may be deployed on water (for example, on a ship), or the terminal device 101 may be deployed in air (for example, on an aircraft, a balloon, and a satellite).

The network device 102 may be an access network device (or referred to as an access website). The access network device is a device that provides a network access function, for example, a radio access network (radio access network, RAN) base station. The network device 102 may specifically include a base station (base station, BS), or include a base station, a radio resource management device configured to control the base station, and the like. The network device 102 may further include a relay station (relay device), an access point, a base station or an NR base station in a 5G network, a base station in a future evolved PLMN network, and the like. The network device 102 may be a wearable device or a vehicle-mounted device. The network device 102 may alternatively be a communication chip having a communication module.

For example, the network device 102 includes but is not limited to: a base station (gNodeB, gNB) in 5G, an evolved NodeB (evolved NodeB, eNB) in a long term evolution (long term evolution, LTE) system, a radio network controller (radio network controller, RNC), a radio controller in a cloud radio access network (cloud radio access network, CRAN) system, a base station controller (base station controller, BSC), a home base station (for example, a home evolved NodeB or home NodeB, HNB), a baseband unit (baseband unit, BBU), a transmission reception point (transmission reception point, TRP), a transmission point (transmission point, TP), a mobile switching center, or a base transceiver station (base transceiver station, BTS) in a global system for mobile communications (global system for mobile communications, GSM) or a code division multiple access (code division multiple access, CDMA) network, or may be a node base station (node base station, NB) in wideband code division multiple access (wideband code division multiple access, WCDMA), or may be an evolved (evolved) NB (eNB or eNodeB) in LTE, or may be a base station device in a future 5G network or an access network device in a future evolved PLMN network, or may be a wearable device or a vehicle-mounted device.

In some deployments, the network device may include a central unit (central unit, CU) and a distributed unit (distributed unit, DU). The network device may further include an active antenna unit (active antenna unit, AAU). The CU implements some functions of the network device, and the DU implements some functions of the network device. For example, the CU is responsible for processing a non-real-time protocol and service, to implement functions of a radio resource control (radio resource control, RRC) layer and a packet data convergence protocol (packet data convergence protocol, PDCP) layer. The DU is responsible for processing a physical layer protocol and a real-time service, to implement functions of a radio link control (radio link control, RLC) layer, a media access control (media access control, MAC) layer and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

In addition, the network device 102 may be connected to a core network (core network, CN) device. The core network device may be configured to provide a core network service for connecting the network device 102 and the terminal device 101. The core network device may correspond to different devices in different systems. For example, in 3G, the core network device may correspond to a serving general packet radio service (general packet radio service, GPRS) support node (serving GPRS support node, SGSN) and/or a gateway GPRS support node (gateway GPRS Support Node, GGSN). In 4G, the core network device may correspond to a mobility management entity (mobility management entity, MME) and/or a serving gateway (serving gateway, S-GW). In 5G, the core network device may correspond to an access and mobility management function (access and mobility management function, AMF), a session management function (session management function, SMF), or a user plane function (user plane function, UPF).

For ease of description, an example in which the terminal device is UE and the network device is a base station is used in embodiments of this application.

For ease of understanding this application, concepts in this application are first described.

### 1. Cell DTX, cell DTX cycle, inactive period, active period, cell DTX configuration information, and cell DTX on-duration timer

The cell DTX (cell DTX or cell dtx) technology enables a network device to perform downlink transmission with a terminal device in a specified time period, and stop downlink transmission in another time period, thereby achieving network energy saving. Downlink transmission may include downlink service transmission. Optionally, downlink transmission may further include a periodic signal, for example, a synchronization signal block (synchronization signal block, SSB) or a channel state information-reference signal (channel state information-reference signal, CSI-RS).

For example, FIG. 2 is a diagram of a cell DTX cycle configuration according to an embodiment of this application. As shown in FIG. 2, a cell DTX cycle is configured for a cell. There are two cell DTX states: an active period state (cell DTX on, cell dtx on, or active period) and an inactive period state (cell DTX off, cell dtx off, or inactive period). When cell DTX is in an active period, for example, in a time period of t0 to t1 in FIG. 2, a network device may perform downlink transmission. When cell DTX is in an inactive period, for example, in a time period of t1 to t2 in FIG. 2, the network device shuts down downlink transmission. It may be understood that a longer inactive period indicates that the network device can obtain a better energy saving effect, but correspondingly, a service transmission delay of a terminal device in the cell increases.

A serving cell of the terminal device may send cell DTX configuration information to the terminal device. For example, as shown in FIG. 3, the following step is included.

S301: A base station sends the cell DTX configuration information to UE.

The cell DTX configuration information includes a cell DTX cycle, a time-domain offset (offset) at the start of the active period or the inactive period, and duration (duration) of the active period or the inactive period. Optionally, the duration may be indicated in a form of a timer, for example, a cell DTX on-duration timer (celldtx-onDurationTimer). The timer runs at a start moment when cell DTX is cyclically in the active period, and stops running at a start moment when cell DTX is cyclically in the inactive period. The duration is indicated by the timer. Whether cell DTX is in the active period state or the inactive period state is determined by starting the timer and determining whether the timer expires, and this is more efficient and convenient for implementation. It should be noted that a name of the timer is not limited in this application.

Optionally, the cell DTX configuration information may further include a signal and/or signaling that are/is not sent by the network device when cell DTX is in the inactive period.

Optionally, the cell DTX configuration information may be carried in a radio resource control (radio resource control, RRC) message.

Correspondingly, the UE receives the cell DTX configuration information sent by the base station. The cell DTX configuration information may take effect immediately during configuration, or may take effect after the terminal device receives corresponding activation signaling.

The UE may determine, based on the cell DTX configuration information, the start moment when cell DTX is cyclically in the active state or the inactive state, where the cell DTX on-duration timer is started at a start moment of each periodic active state; and/or determine an end moment of each periodic active state; and/or determine duration (cell DTX on duration) of each periodic active state.

### 2. C-DRX, C-DRX cycle, sleep period, active period, C-DRX configuration information, and C-DRX-related timer

A C-DRX technology enables a terminal device to enter a sleep mode (sleep mode) in a specified time period and not to monitor a PDCCH. When monitoring needs to be performed, the terminal device wakes up (wakes up) from the sleep mode, and enters a wake-up mode, to achieve power saving of the terminal device.

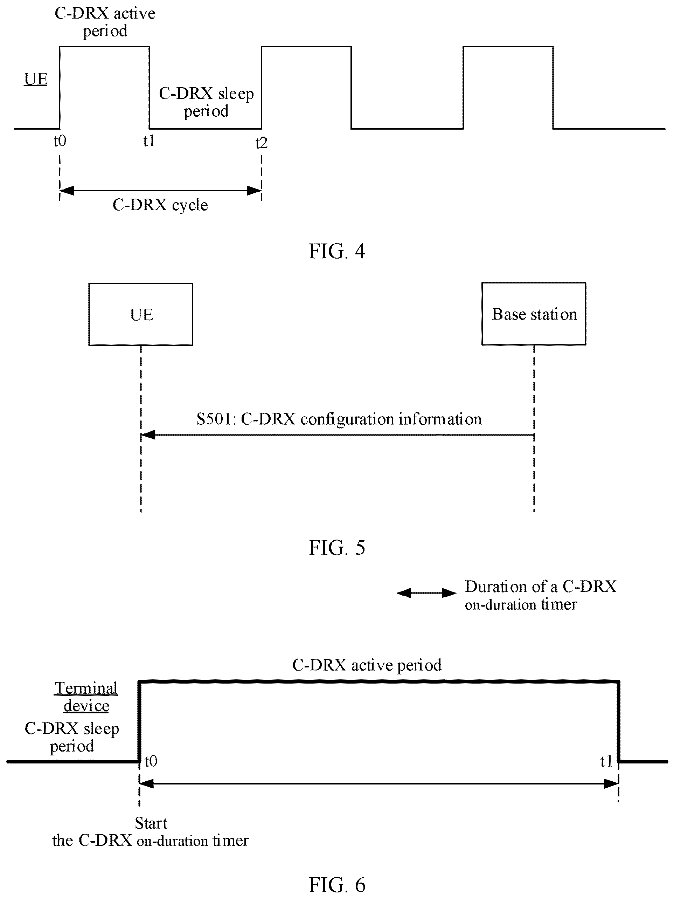

For example, FIG. 4 is a diagram of a C-DRX cycle configuration according to an embodiment of this application. As shown in FIG. 4, a C-DRX cycle is configured for UE. There are two C-DRX states of the UE: an active period and a sleep period. When the UE is in the C-DRX active period, for example, in a time period of t0 to t1 in FIG. 4, the UE monitors a PDCCH. When the UE is in the C-DRX sleep period, for example, in a time period of t1 to t2 in FIG. 4, the UE does not monitor the PDCCH. It may be understood that a longer C-DRX sleep period indicates that the terminal device can obtain a better energy saving effect, but correspondingly, a service transmission delay of the terminal device increases.

A serving cell of the terminal device may send C-DRX configuration information to the terminal device. For example, as shown in FIG. 5, the following step is included.

S501: A base station sends the C-DRX configuration information to the UE.

The C-DRX configuration information includes a C-DRX cycle, a time-domain offset (offset) and duration (duration) of a periodic C-DRX wake-up period, and a C-DRX-related timer. Optionally, the duration of the periodic wake-up period may be indicated in a form of a timer, for example, a C-DRX on-duration timer (drx-onDurationTimer). The timer runs at a start moment when C-DRX is cyclically in the C-DRX active period by default, and stops running at a start moment when C-DRX is cyclically in the C-DRX sleep period by default.

Optionally, the C-DRX-related timer includes but is not limited to a C-DRX on-duration timer (drx-onDurationTimer), a C-DRX inactivity timer (drx-InactivityTimer), or a C-DRX retransmission timer (drx-RetransmissionTimer). The C-DRX-related timer is configured to determine whether the terminal device enters the C-DRX active period or the C-DRX sleep period. When at least one of the foregoing timers related to C-DRX is running, the terminal device enters the C-DRX active period. When all of the foregoing timers related to C-DRX stop running, the terminal device enters the C-DRX sleep period.

Optionally, the C-DRX related timer further includes a C-DRX hybrid automatic repeat request round trip time timer (C-DRX HARQ-RTT timer or drx-HARQ-RTT-Timer). HARQ represents a hybrid automatic repeat request (Hybrid Automatic Repeat Request), and RTT represents round trip time (Round Trip Time). drx-HARQ-RTT-Timer does not affect the terminal device entering the active period or entering the inactive period.

For a start or restart condition and a stop condition of the C-DRX-related timer, refer to Table 1. It should be noted that a name of the C-DRX-related timer is not limited in this application.

Optionally, the C-DRX configuration information may be carried in an RRC message.

Correspondingly, the UE receives the C-DRX configuration information sent by the base station, and may determine, based on the C-DRX configuration information, whether the UE enters the C-DRX active period or the C-DRX sleep period.

**Table 1**

| Timer related to C-DRX | Start or restart condition | Stop condition |
|---|---|---|
| drx-onDurationTimer | The start moment of the periodic | The timer expires; or |
| | C-DRX active period (On duration) indicated by a C-DRX configuration arrives. | a DRX command media access control control element (DRX Command MAC CE) is received, where the MAC CE is a media access control control element. |
| drx-InactivityTimer | PDCCH signaling for scheduling | The timer expires; or |
| | initial uplink or downlink data transmission is received. | a DRX command MAC CE is received. |
| drx-HARQ-RTT-Timer | PDCCH signaling for scheduling downlink transmission is received; or | The timer expires. |
| | a current subframe is a periodically configured downlink semi-persistent scheduling (semi-persistent scheduling, SPS) subframe. | |
| drx-RetransmissionTimer | drx-HARQ-RTT-Timer expires and data received by using a corresponding HARQ process is not successfully decoded. | The timer expires; or |
| | | PDCCH signaling for scheduling downlink transmission is received; or |
| | | a current subframe is a periodically configured downlink SPS subframe. |

### 3. C-DRX on-duration timer (drx-onDurationTimer)

For example, FIG. 6 is a diagram of a principle of a C-DRX on-duration timer according to an embodiment of this application, and shows a C-DRX cycle. As shown in FIG. 6, in the C-DRX cycle, at a moment t0, the C-DRX on-duration timer is started, and at a moment t1, the C-DRX on-duration timer expires, and the C-DRX on-duration timer stops running.

### 4. C-DRX inactivity timer (drx-InactivityTimer)

After UE is scheduled to receive or send data in a slot, it is very likely that the UE continues to be scheduled in the following several slots. Therefore, a principle of the C-DRX inactivity timer is as follows: When the UE enters a C-DRX active period based on a C-DRX on-duration timer, if the UE performs initial uplink or downlink data transmission, the C-DRX inactivity timer is started or restarted, so that the UE remains in an active state during running of the C-DRX inactivity timer until the C-DRX inactivity timer expires.

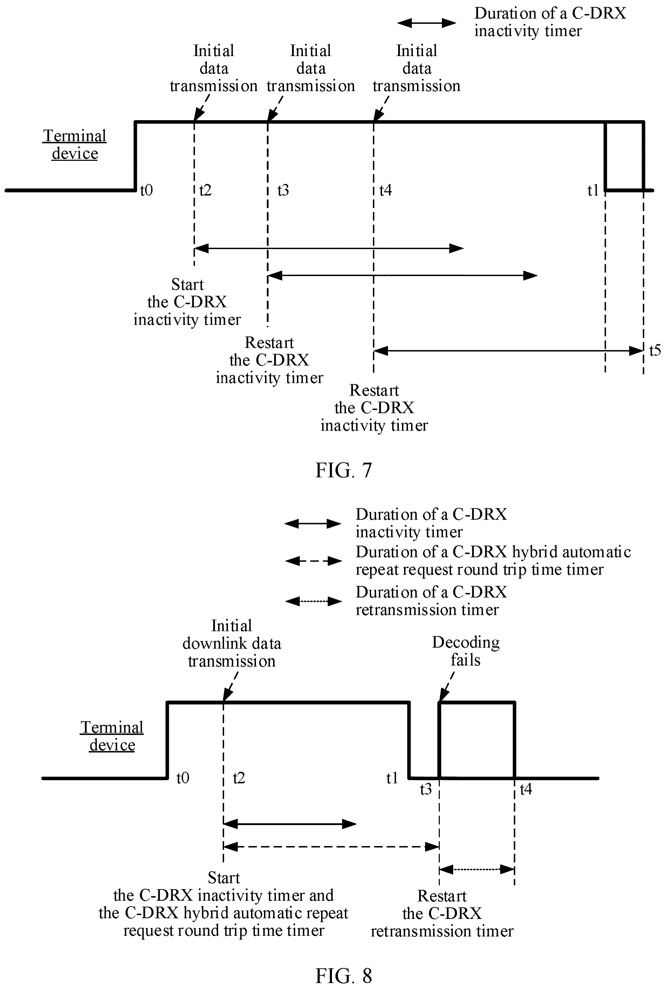

For example, FIG. 7 is a diagram of a principle of a C-DRX inactivity timer according to an embodiment of this application, and shows a C-DRX cycle. As shown in FIG. 7, in the C-DRX cycle, a C-DRX on-duration timer is running in a time period of t0 to t1, and UE is in a periodic C-DRX active period. At a moment t2, the UE is scheduled by a base station to perform initial data transmission, and the base station and the UE start the C-DRX inactivity timer. At a moment t3, the UE is scheduled by the base station to perform initial data transmission again, and if the running C-DRX inactivity timer does not expire, the base station and the UE restart the C-DRX inactivity timer. Similarly, at a moment t4, the UE is scheduled by the base station to perform initial data transmission again, and the base station and the UE restart the C-DRX inactivity timer. At a moment t5, the C-DRX inactivity timer expires, and the C-DRX inactivity timer stops running. In FIG. 7, in a time period of t0 to t5, the UE remains in the C-DRX active period.

### 5. C-DRX hybrid automatic repeat request round trip time timer (drx-HARQ-RTT-Timer) and C-DRX retransmission timer (drx-RetransmissionTimer)

A principle of drx-HARQ-RTT-Timer is as follows: When data transmission (or transmission of data) is performed, drx-HARQ-RTT-Timer of a HARQ process corresponding to data transmission is started. Data transmission includes any one of the following: initial uplink transmission, initial downlink transmission, uplink retransmission, or downlink retransmission. If decoding of a transport block (transport block, TB) of the HARQ process fails, according to a retransmission mechanism, UE may assume that retransmission occurs at least after "HARQ RTT". Therefore, when drx-HARQ-RTT-Timer is running, the UE does not need to monitor a PDCCH. When drx-HARQ-RTT-Timer expires, a C-DRX retransmission timer is started, and the UE monitors a PDCCH used for HARQ retransmission.

For example, FIG. 8 is a diagram of a principle of a C-DRX hybrid automatic repeat request round trip time timer and a C-DRX retransmission timer according to an embodiment of this application, and shows a C-DRX cycle. As shown in FIG. 8, in the C-DRX cycle, a C-DRX on-duration timer is running in a time period of t0 to t1, and UE is in a periodic C-DRX active period. At a moment t2, the UE is scheduled by a base station to perform initial downlink data transmission, and the base station and the UE start drx-HARQ-RTT-Timer and a C-DRX inactivity timer. During running of the C-DRX inactivity timer, the UE is in the C-DRX active period. Running of drx-HARQ-RTT-Timer does not affect a C-DRX state. At a moment t1, the C-DRX on-duration timer expires, no C-DRX inactivity timer is running, and the UE enters a C-DRX sleep period. At a moment t3, drx-HARQ-RTT-Timer expires and stops running, and it is determined that data received by using a corresponding HARQ process is not successfully decoded. Therefore, the C-DRX retransmission timer is started. During running of the C-DRX retransmission timer, the UE needs to be in the C-DRX active period. That is, in a time period of t3 to t5, the UE is in the C-DRX active period. At the moment t5, the C-DRX retransmission timer expires and stops running, and the UE enters the C-DRX sleep period.

In a related technology, in a scenario in which C-DRX is configured for an accessed terminal device in a cell enabling a cell DTX technology, because a cell DTX cycle may not be aligned with a C-DRX cycle, time for a network device to perform data transmission is not aligned with time for the terminal device to perform data transmission, and the terminal device performs an unnecessary action of monitoring a PDCCH, resulting in high energy consumption. Even if the cell DTX cycle is aligned with the C-DRX cycle, because a C-DRX state of the terminal device is further affected by a C-DRX-related timer, for example, a C-DRX on-duration timer, a C-DRX inactivity timer, or a C-DRX retransmission timer, the terminal device still performs the unnecessary action of monitoring the PDCCH, resulting in a waste of terminal energy.

Embodiments of this application provide a discontinuous reception method. Whether a terminal device enters a C-DRX active period or enters a C-DRX sleep period needs to consider a cell DTX state. When the cell DTX state is an inactive period state, because a network device shuts down transmission, to avoid an unnecessary action of monitoring a PDCCH by the terminal device, the terminal device is to enter the C-DRX sleep period, or a running state of a C-DRX-related timer is changed to determine that the terminal device enters the C-DRX sleep period, so as to avoid a waste of terminal energy.

The following describes the technical solutions of this application in detail by using specific embodiments.

In embodiments of this application, unless otherwise specified, for same or similar parts of embodiments, refer to each other. In various embodiments of this application and the implementations/methods/implementation methods in various embodiments, unless otherwise specified or a logical conflict occurs, terms and/or descriptions are consistent and may be mutually referenced between different embodiments and between the implementations/methods/implementation methods in various embodiments. Technical features in the different embodiments and the implementations/methods/implementation methods in various embodiments may be combined to form a new embodiment, implementation, method, or implementation method based on an internal logical relationship thereof. The foregoing descriptions are implementations of this application, but are not intended to limit the protection scope of this application. Steps in each embodiment may be partially performed (for example, the terminal device may not perform the steps performed by the terminal device in the foregoing embodiments). An execution sequence of different steps can be changed. Embodiments described in this specification may be combined with other embodiments, and steps of different embodiments in this specification may also be combined.

An "embodiment" mentioned in this specification means that a particular feature, structure, or characteristic described with reference to the embodiment may be included in at least one embodiment of this application. The phrase shown in various locations in the specification does not necessarily refer to a same embodiment, and is not an independent or optional embodiment exclusive from another embodiment.

In embodiments of this application, terms "first", "second", "third", "fourth", and the like (if existent) are intended to distinguish between similar objects, but do not necessarily indicate a specific order or sequence.

In embodiments of this application, "include" may indicate an inclusion relationship, or an equal relationship. For example, if A includes B, A may include other content in addition to B, or A and B are the same content.

Unless otherwise specified, "/" in the descriptions of this application represents an "or" relationship between associated objects. For example, A/B may represent A or B. In this application, "and/or" describes only an association relationship between associated objects and represents that three relationships may exist. For example, A and/or B may represent the following three cases: Only A exists, both A and B exist, and only B exists, where A and B may be singular or plural. In addition, in the descriptions of this application, "a plurality of' means two or more unless otherwise specified. "At least one of the following items (pieces)" or a similar expression thereof means any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, sometimes "of (of)", "corresponding (corresponding, relevant)", and "corresponding (corresponding)" may be mixed. It should be noted that when differences are not emphasized, the meaning to be expressed is the same.

In embodiments of this application, terms such as "example" and "for example" are used to represent giving an example, an illustration, or a description. Any embodiment or design solution described as an "example" in this application should not be explained as being more preferred or having more advantages than another embodiment or design scheme. Exactly, the term "example" is intended to present a concept in a specific manner.

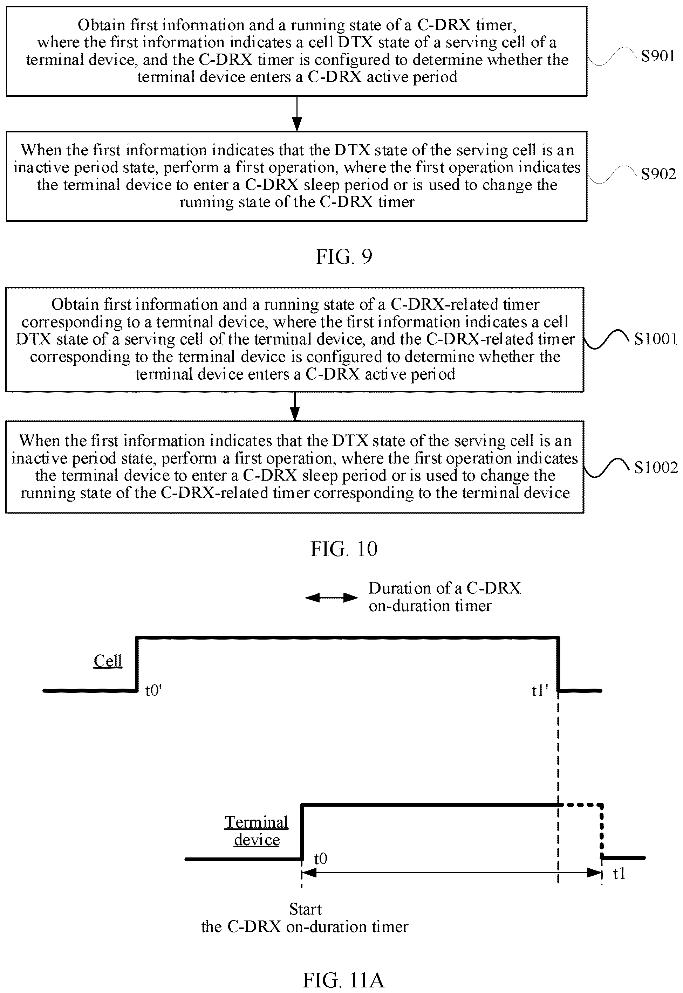

FIG. 9 is a flowchart of a discontinuous reception method according to an embodiment of this application. The discontinuous reception method provided in this embodiment may be performed by a terminal device. As shown in FIG. 9, the discontinuous reception method provided in this embodiment includes the following steps.

S901: Obtain first information and a running state of a C-DRX-related timer, where the first information indicates a cell DTX state of a serving cell of the terminal device, and the C-DRX-related timer is configured to determine whether the terminal device enters a C-DRX active period.

Cell DTX states include an active period state and an inactive period state. For details, refer to the foregoing descriptions in this application. Details are not described herein again.

The C-DRX-related timer includes but is not limited to a C-DRX on-duration timer, a C-DRX inactivity timer, or a C-DRX retransmission timer. For details, refer to the foregoing descriptions in this application. Details are not described herein again.

Optionally, the obtaining the first information may include:
determining, based on cell DTX configuration information, whether a cell DTX on-duration timer is running, and/or determining whether DTX of the serving cell is in an inactive period, and/or determining whether DTX of the serving cell is in an active period, to obtain the first information.

For the cell DTX configuration information and the cell DTX on-duration timer, refer to the foregoing descriptions in this application. Details are not described herein again.

Optionally, the first information is that the cell DTX on-duration timer of the serving cell stops running, cell DTX of the serving cell is in the inactive period, or cell DTX of the serving cell is not in the active period, to indicate that the DTX state of the serving cell is the inactive period state.

The first information is that the cell DTX on-duration timer of the serving cell is running, cell DTX of the serving cell is in the active period, or cell DTX of the serving cell is not in the inactive period, to indicate that the DTX state of the serving cell is the active period state.

S902: When the first information indicates that the DTX state of the serving cell is the inactive period state, perform a first operation, where the first operation indicates the terminal device to enter a C-DRX sleep period or is used to change the running state of the C-DRX-related timer.

Specifically, when the first information indicates that the DTX state of the serving cell is the inactive period state, a network device shuts down downlink transmission in the serving cell. During this period, if the terminal device monitors a PDCCH, an action of monitoring the PDCCH by the terminal device is unnecessary. Therefore, the terminal device is to perform the first operation.

In an implementation, the first operation indicates the terminal device to enter the C-DRX sleep period. The terminal device directly enters the C-DRX sleep period, so that energy consumption is reduced, and this has a simple implementation.

In another implementation, the terminal device changes the running state of the C-DRX-related timer. The terminal device determines, based on the running state of the C-DRX-related timer, to enter the C-DRX sleep period. In this implementation, the running state of the C-DRX-related timer is changed, so that it is ensured that a determining mechanism of the terminal device in a C-DRX technology remains unchanged, and energy consumption is reduced.

It can be learned that, in the discontinuous reception method provided in this embodiment, whether the terminal device enters the C-DRX sleep period needs to consider the cell DTX state. When the cell DTX state is the inactive period state, to avoid the unnecessary action of monitoring the PDCCH by the terminal device, the terminal device is to enter the C-DRX sleep period, or the running state of the C-DRX-related timer is changed to determine that the terminal device enters the C-DRX sleep period, so as to reduce terminal energy consumption.

Optionally, the discontinuous reception method provided in this embodiment may further include:
when the first information indicates that the DTX state of the serving cell is the active period state, determining, based on the running state of the C-DRX-related timer, whether the terminal device enters the C-DRX sleep period.

In this implementation, when the first information indicates that the DTX state of the serving cell is the active period state, the network device performs downlink transmission in the serving cell. During this period, if the terminal device monitors the PDCCH, the action of monitoring the PDCCH by the terminal device is a valid action. Therefore, the terminal device determines, based on the running state of the C-DRX-related timer, whether to enter the C-DRX sleep period or enter the C-DRX active period.

Because the DTX state of the serving cell is considered, the unnecessary action of monitoring the PDCCH by the terminal device can be avoided, thereby reducing terminal energy consumption.

Optionally, the first operation includes any one of the following:
the terminal device enters the C-DRX sleep period;
the terminal device skips monitoring scheduling information of the PDCCH;
stopping a running first C-DRX timer;
suspending a running second C-DRX timer; and
when a C-DRX hybrid automatic repeat request round trip time timer stops, skipping starting or skipping restarting a C-DRX retransmission timer.

That the first operation indicates the terminal device to enter the C-DRX sleep period may include: The terminal device enters the C-DRX sleep period; or the terminal device skips monitoring the scheduling information of the PDCCH; and the terminal device directly enters the C-DRX sleep period; or the terminal device directly skips monitoring the scheduling information of the PDCCH. This can reduce energy consumption, and has a simple implementation. Optionally, that the terminal device skips monitoring the scheduling information of the PDCCH may include: The terminal device suspends monitoring the scheduling information of the PDCCH; or the terminal device stops monitoring the scheduling information of the PDCCH.

That the first operation is used to change the running state of the C-DRX-related timer may include: stopping the running first C-DRX timer; or suspending the running second C-DRX timer; or when the C-DRX hybrid automatic repeat request round trip time timer stops, skipping starting or skipping restarting the C-DRX retransmission timer.

The first C-DRX timer or the second C-DRX timer is a currently running C-DRX timer. When at least one C-DRX-related timer runs, the terminal device is in the C-DRX active period. In other words, the terminal device is in the C-DRX active period at a current moment, and monitors the scheduling information of the PDCCH. However, at the current moment, the first information indicates that the DTX state of the serving cell is the inactive period state. As a result, the action of monitoring the PDCCH by the terminal device is unnecessary. Therefore, running of the first C-DRX timer is stopped or running of the second C-DRX timer is suspended, so that the terminal device can determine, based on a current running state of the first C-DRX timer or the second C-DRX timer, to enter the C-DRX sleep period, to reduce energy consumption.

A difference between "stop" and "suspend" lies in that subsequently, for the first C-DRX timer that stops, the first C-DRX timer may be started or restarted. For example, duration of the first C-DRX timer is two slots, and duration of one slot remains when the first C-DRX timer stops. Subsequently, the first C-DRX timer is started or restarted, and expires after duration of two slots. For the suspended second C-DRX timer, the second C-DRX timer may be started or restarted, or the suspended second C-DRX timer may continue to run. For example, duration of the second C-DRX timer is two slots, and duration of one slot remains when the second C-DRX timer is suspended. Subsequently, the suspended second C-DRX timer may continue to run, and after duration of one slot, the second C-DRX timer that continues to run expires.

According to a principle of a drx-HARQ-RTT-Timer timer, if the drx-HARQ-RTT-Timer timer stops, the C-DRX retransmission timer needs to be started, and the terminal device enters the C-DRX active period, and monitors the scheduling information of the PDCCH. However, at the current moment, the first information indicates that the DTX state of the serving cell is the inactive period state. As a result, the action of monitoring the PDCCH by the terminal device is unnecessary. Therefore, the C-DRX retransmission timer is not started or not restarted, to reduce terminal energy consumption.

Optionally, the first C-DRX timer includes a cyclically started C-DRX timer and/or a C-DRX timer that is not cyclically started.

In this implementation, the C-DRX timer is started cyclically or not cyclically, and may stop running when the DTX state of the serving cell is the inactive period state, to reduce terminal energy consumption.

Optionally, the first C-DRX timer includes at least one of the following: a C-DRX on-duration timer, a C-DRX inactivity timer, or a C-DRX retransmission timer.

Optionally, the second C-DRX timer includes a C-DRX timer that is not cyclically started.

In this implementation, because a cyclically started C-DRX timer has fixed time to start or stop running, running of the C-DRX timer that is not cyclically started may be suspended when the DTX state of the serving cell is the inactive period state, to subsequently resume running of the suspended second C-DRX timer.

Optionally, the second C-DRX timer is a C-DRX inactivity timer or a C-DRX retransmission timer.

Optionally, the first operation is stopping the running first C-DRX timer. The discontinuous reception method may further include:
when the first information indicates that the DTX state of the serving cell changes from the inactive period state to the active period state, starting or restarting the first C-DRX timer.

Specifically, when the C-DRX-related timer is running, the terminal device is in the C-DRX active period, and monitors the scheduling information of the PDCCH. In a scenario in which the first C-DRX timer stops running because the DTX state of the serving cell of the terminal device is the inactive period state, or the DTX state of the serving cell is not the active period state, or the cell DTX on-duration timer stops running, when the first information indicates that the DTX state of the serving cell changes from the inactive period state to the active period state, or when the cell DTX on-duration timer is running, the first C-DRX timer may be started or restarted. In this way, time for the terminal device to monitor the scheduling information of the PDCCH is extended, to ensure data transmission and improve service quality.

Optionally, the first operation is suspending the running second C-DRX timer. The discontinuous reception method may further include:
when the first information indicates that the DTX state of the serving cell changes from the inactive period state to the active period state, starting, restarting, or continuing to run the suspended second C-DRX timer.

Specifically, in a scenario in which the second C-DRX timer stops running because the DTX state of the serving cell of the terminal device is the inactive period state, or the DTX state of the serving cell is not the active period state, or the cell DTX on-duration timer stops running, when the first information indicates that the DTX state of the serving cell changes from the inactive period state to the active period state, or when the cell DTX on-duration timer is running, the second C-DRX timer may be started, restarted, or continue to run. In this way, time for the terminal device to monitor the scheduling information of the PDCCH is extended, to ensure data transmission and improve service quality.

Optionally, the first operation is: when the C-DRX hybrid automatic repeat request round trip time timer stops, skipping starting or skipping restarting the C-DRX retransmission timer. The following may be further included:
when the first information indicates that the DTX state of the serving cell changes from the inactive period state to the active period state, starting or restarting the C-DRX retransmission timer.

In this implementation, in a scenario in which the C-DRX retransmission timer is not started or restarted because the DTX state of the serving cell of the terminal device is the inactive period state, or the DTX state of the serving cell is not the active period state, or the cell DTX on-duration timer stops running, when the first information indicates that the DTX state of the serving cell changes from the inactive period state to the active period state, or when the cell DTX on-duration timer is running, the C-DRX retransmission timer may be started or restarted. In this way, time for the terminal device to monitor the scheduling information of the PDCCH is extended, to ensure data transmission and improve service quality.

FIG. 10 is another flowchart of a discontinuous reception method according to an embodiment of this application. The discontinuous reception method provided in this embodiment may be performed by a network device. A difference between this embodiment and the embodiment shown in FIG. 9 lies in that in this embodiment, for each terminal device in a serving cell, the network device configures C-DRX configuration information for the terminal device, and the terminal device corresponds to a C-DRX-related timer. Running states of timers that are related to C-DRX and that respectively correspond to different terminal devices in the serving cell may be different at a same moment. For each terminal device in a connected state in the serving cell, the network device needs to determine a C-DRX state of the terminal device, to be specific, whether the terminal device enters or is in a C-DRX active period/C-DRX sleep period, to determine whether scheduling information of a PDCCH can be sent to the terminal. In the embodiment shown in FIG. 9, the terminal device is configured with C-DRX configuration information by the network device, and corresponds to the C-DRX-related timer. The technical solution and technical effects of the discontinuous reception method provided in this embodiment are similar to those of the discontinuous reception method provided in the embodiment shown in FIG. 9.

As shown in FIG. 10, the discontinuous reception method provided in this embodiment includes the following steps.

S1001: Obtain first information and a running state of the C-DRX-related timer corresponding to the terminal device, where the first information indicates a cell DTX state of the serving cell of the terminal device, and the C-DRX-related timer corresponding to the terminal device is configured to determine whether the terminal device enters a C-DRX active period.

S1002: When the first information indicates that the DTX state of the serving cell is an inactive period state, perform a first operation, where the first operation indicates the terminal device to enter a C-DRX sleep period or is used to change the running state of the C-DRX-related timer corresponding to the terminal device.

Optionally, the first operation includes any one of the following:
the terminal device enters the C-DRX sleep period;
the terminal device skips monitoring the scheduling information of the PDCCH;
stopping a running first C-DRX timer corresponding to the terminal device;
suspending a running second C-DRX timer corresponding to the terminal device; and
when a C-DRX hybrid automatic repeat request round trip time timer corresponding to the terminal device stops, skipping starting or skipping restarting a C-DRX retransmission timer corresponding to the terminal device.

Optionally, the first operation is stopping the running first C-DRX timer corresponding to the terminal device. The method further includes:
when the first information indicates that the DTX state of the serving cell changes from the inactive period state to an active period state, starting or restarting the first C-DRX timer corresponding to the terminal device.

Optionally, the first operation is suspending the running second C-DRX timer corresponding to the terminal device. The method further includes:
when the first information indicates that the DTX state of the serving cell changes from the inactive period state to an active period state, continuing to run the suspended second C-DRX timer corresponding to the terminal device.

Optionally, the first C-DRX timer includes at least one of the following: a C-DRX on-duration timer, a C-DRX inactivity timer, or a C-DRX retransmission timer.

Optionally, the second C-DRX timer is a C-DRX inactivity timer or a C-DRX retransmission timer.

Optionally, the first operation is: when the C-DRX hybrid automatic repeat request round trip time timer corresponding to the terminal device stops, skipping starting or skipping restarting the C-DRX retransmission timer corresponding to the terminal device. The method further includes:
when the first information indicates that the DTX state of the serving cell changes from the inactive period state to an active period state, starting or restarting the C-DRX retransmission timer corresponding to the terminal device.

Optionally, the obtaining the first information includes:
determining, based on cell DTX configuration information, whether a cell DTX on-duration timer of the serving cell is running, and/or determining whether DTX of the serving cell is in an inactive period, and/or determining whether DTX of the serving cell is in an active period, to obtain the first information.

Optionally, the first information is that the cell DTX on-duration timer of the serving cell stops running, cell DTX of the serving cell is in the inactive period, or cell DTX of the serving cell is not in the active period, to indicate that the DTX state of the serving cell is the inactive period state. Alternatively, the first information is that the cell DTX on-duration timer of the serving cell is running, cell DTX of the serving cell is in the active period, or cell DTX of the serving cell is not in the inactive period, to indicate that the DTX state of the serving cell is the active period state.

Optionally, the method further includes:
when the first information indicates that the DTX state of the serving cell is the active period state, determining, based on the running state of the C-DRX-related timer corresponding to the terminal device, whether the terminal device enters the C-DRX sleep period.

Based on embodiments shown in FIG. 9 and FIG. 10, in another embodiment of this application, a discontinuous reception method is provided, and relates to a C-DRX on-duration timer (drx-onDurationTimer). The discontinuous reception method provided in this embodiment may be performed by a terminal device or a network device.

The discontinuous reception method provided in this embodiment may include:
obtaining first information and a running state of the C-DRX on-duration timer, where the first information indicates a cell DTX state of a serving cell of the terminal device, and the C-DRX on-duration timer is configured to determine whether the terminal device enters a C-DRX active period;
when the first information indicates that the DTX state of the serving cell is an inactive period state, performing a first operation, where the first operation indicates the terminal device to enter a C-DRX sleep period or is used to change the running state of the C-DRX on-duration timer ; and
when the first information indicates that the DTX state of the serving cell is an active period state, determining, based on the running state of the C-DRX on-duration timer, whether the terminal device enters the C-DRX sleep period.

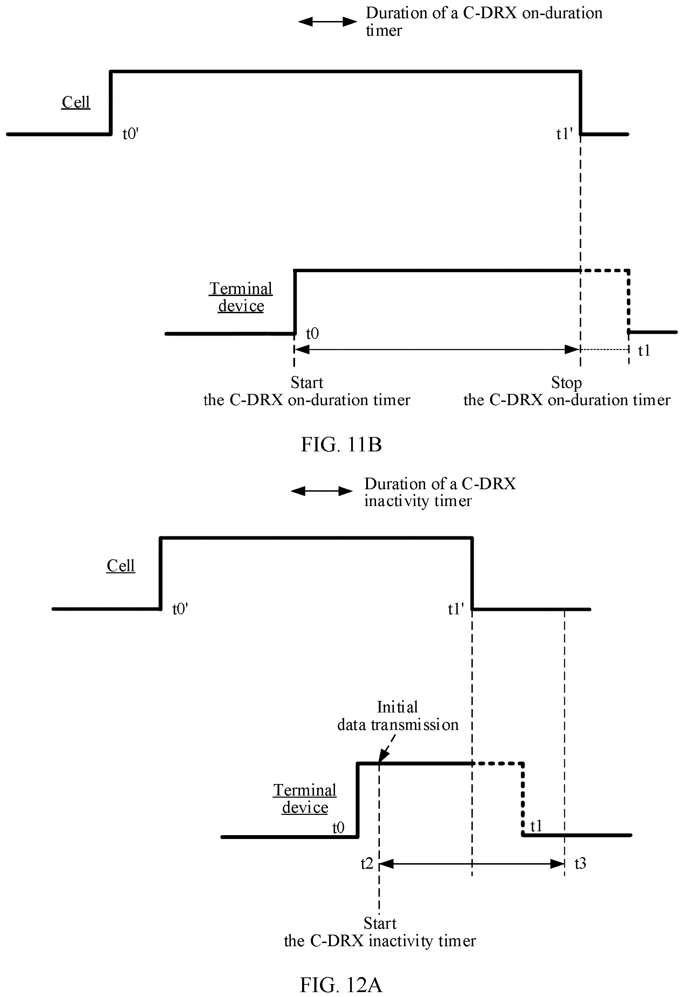

For example, FIG. 11A and FIG. 11B are a set of diagrams related to a C-DRX on-duration timer according to an embodiment of this application, and show a C-DRX cycle. In a cell DTX cycle of a serving cell, in a time period of t0' to t1', a DTX state of the serving cell is a periodic active period state. In the C-DRX cycle of a terminal device, in a time period of t0 to t1, the C-DRX on-duration timer is running, and UE is in a periodic C-DRX active period. It is assumed that no C-DRX inactivity timer or C-DRX retransmission timer is running.

In the time period of t0' to t1', the DTX state of the serving cell is the active period state, and whether the terminal device enters a C-DRX sleep period is determined based on a running state of the C-DRX on-duration timer. Specifically, in a time period of t0 to t1', a cell DTX on-duration timer of the serving cell is running, or cell DTX of the serving cell is in an active period, or cell DTX of the serving cell is not in an inactive period. In addition, the C-DRX on-duration timer is running, and the terminal device is in the C-DRX active period, or the terminal device monitors scheduling information of a PDCCH.

At a moment t1', the cell DTX on-duration timer of the serving cell stops running, or cell DTX of the serving cell is in the inactive period, or cell DTX of the serving cell is not in the active period, and a first operation is performed.

In an example, as shown in FIG. 11A, the first operation indicates the terminal device to enter the C-DRX sleep period. Optionally, the terminal device enters the C-DRX sleep period. Optionally, the terminal device skips monitoring the scheduling information of the PDCCH. In this scenario, the C-DRX on-duration timer continues to run until a moment t1, and the C-DRX on-duration timer expires and stops running.

In another example, as shown in FIG. 11B, the first operation is used to change the running state of the C-DRX on-duration timer, and stop the running C-DRX on-duration timer. To be specific, at the moment t1', the C-DRX on-duration timer stops running. The terminal device may enter the C-DRX sleep period or skip monitoring the scheduling information of the PDCCH based on the running state of the C-DRX on-duration timer.

This embodiment relates to the C-DRX on-duration timer. The cell DTX state and the running state of the C-DRX on-duration timer are considered to determine whether the terminal enters the C-DRX sleep period, so that an unnecessary action of monitoring the PDCCH by the terminal device can be avoided, thereby reducing terminal energy consumption.

Based on embodiments shown in FIG. 9 and FIG. 10, in still another embodiment of this application, a discontinuous reception method is provided, and relates to a C-DRX inactivity timer (drx-InactivityTimer). The discontinuous reception method provided in this embodiment may be performed by a terminal device or a network device.

The discontinuous reception method provided in this embodiment may include:
obtaining first information and a running state of the C-DRX inactivity timer, where the first information indicates a cell DTX state of a serving cell of the terminal device, and the C-DRX inactivity timer is configured to determine whether the terminal device enters a C-DRX active period;
when the first information indicates that the DTX state of the serving cell is an inactive period state, performing a first operation, where the first operation indicates the terminal device to enter a C-DRX sleep period or is used to change the running state of the C-DRX inactivity timer; and
when the first information indicates that the DTX state of the serving cell is an active period state, determining, based on the running state of the C-DRX inactivity timer, whether the terminal device enters the C-DRX sleep period.

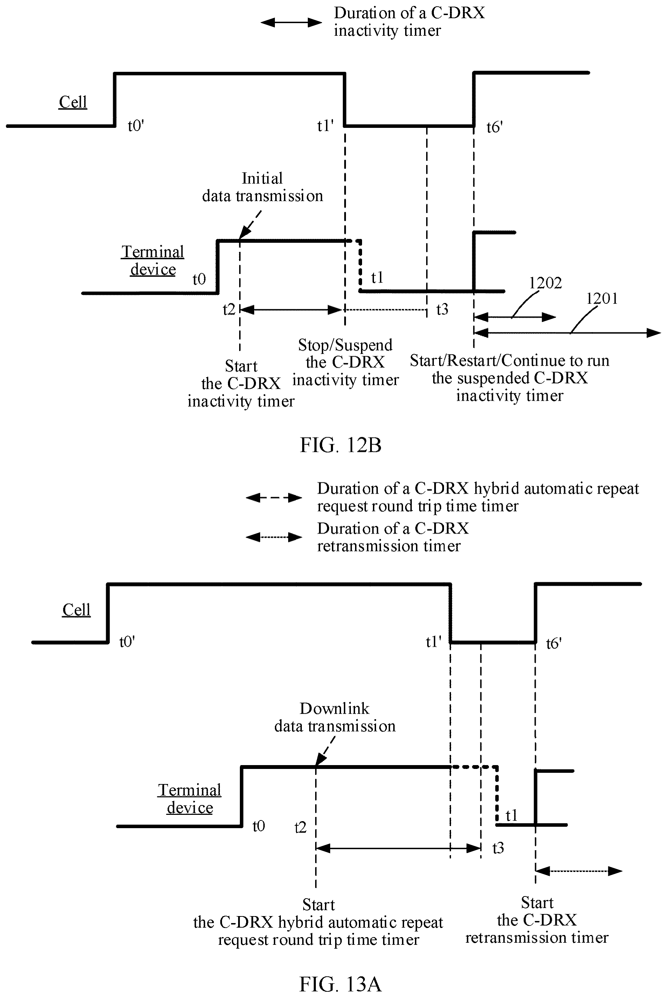

For example, FIG. 12A and FIG. 12B are a set of diagrams related to a C-DRX inactivity timer according to an embodiment of this application, and show one or two C-DRX cycles. In a cell DTX cycle of a serving cell, in a time period of t0' to t1', a DTX state of the serving cell is a periodic active period state, and at a moment t6', the DTX state of the serving cell changes from an inactive period state to the active period state. In the C-DRX cycle of a terminal device, in a time period of t0 to t1, a C-DRX on-duration timer is running, and UE is in a periodic C-DRX active period. At a moment t2, the UE is scheduled by a base station to perform initial data transmission, and the C-DRX inactivity timer is started. It is assumed that no C-DRX retransmission timer is running.

In the time period of t0' to t1', the DTX state of the serving cell is the active period state, and whether the terminal device enters a C-DRX sleep period is determined based on a running state of the C-DRX inactivity timer. Specifically, in a time period of t2 to t1', a cell DTX on-duration timer of the serving cell is running, or cell DTX of the serving cell is in an active period, or cell DTX of the serving cell is not in an inactive period. In addition, the C-DRX inactivity timer is running, and the terminal device is in the C-DRX active period, or the terminal device monitors scheduling information of a PDCCH.

At a moment t1', the cell DTX on-duration timer of the serving cell stops running, or cell DTX of the serving cell is in the inactive period, or cell DTX of the serving cell is not in the active period, and a first operation is performed.

In an example, as shown in FIG. 12A, the first operation indicates the terminal device to enter the C-DRX sleep period. Optionally, the terminal device enters the C-DRX sleep period. Optionally, the terminal device skips monitoring the scheduling information of the PDCCH. In this scenario, the C-DRX inactivity timer continues to run until a moment t3, and the C-DRX inactivity timer expires and stops running.

In another example, as shown in FIG. 12B, the first operation is used to change the running state of the C-DRX inactivity timer.

Optionally, in an implementation, at the moment t1', the C-DRX inactivity timer stops. The terminal device may enter the C-DRX sleep period or skip monitoring the scheduling information of the PDCCH based on the running state of the C-DRX inactivity timer. Subsequently, at the moment t6', when the DTX state of the serving cell changes from the inactive period state to the active period state or the cell DTX on-duration timer is running, the C-DRX inactivity timer is started or restarted. Refer to a number 1201.

Optionally, in another implementation, at the moment t1', the C-DRX inactivity timer is suspended. The terminal device may enter the C-DRX sleep period or skip monitoring the scheduling information of the PDCCH based on the running state of the C-DRX inactivity timer. Subsequently, at the moment t6', the DTX state of the serving cell changes from the inactive period state to the active period state, or the cell DTX on-duration timer is running. Optionally, in an implementation, the C-DRX inactivity timer is started or restarted. Refer to the number 1201. Optionally, in another implementation, the C-DRX inactivity timer that is suspended at the moment t1' continues to run. Refer to a number 1202.

This embodiment relates to the C-DRX inactivity timer. The cell DTX state and the running state of the C-DRX inactivity timer are considered to determine whether the terminal enters the C-DRX sleep period, so that an unnecessary action of monitoring the PDCCH by the terminal device can be avoided, thereby reducing terminal energy consumption.

Based on embodiments shown in FIG. 9 and FIG. 10, in yet another embodiment of this application, a discontinuous reception method is provided, and relates to a C-DRX hybrid automatic repeat request round trip time timer (drx-HARQ-RTT-Timer) and a C-DRX retransmission timer (drx-RetransmissionTimer). The discontinuous reception method provided in this embodiment may be performed by a terminal device or a network device.

The discontinuous reception method provided in this embodiment may include:
obtaining first information and a running state of the C-DRX retransmission timer, where the first information indicates a cell DTX state of a serving cell of the terminal device, and the C-DRX retransmission timer is configured to determine whether the terminal device enters a C-DRX active period;
when the first information indicates that the DTX state of the serving cell is an inactive period state, performing a first operation, where the first operation indicates the terminal device to enter a C-DRX sleep period or is used to change the running state of the C-DRX retransmission timer; and
when the first information indicates that the DTX state of the serving cell is an active period state, determining, based on the running state of the C-DRX retransmission timer, whether the terminal device enters the C-DRX sleep period.

For example, FIG. 13A to FIG. 13C are a set of diagrams related to a C-DRX retransmission timer according to an embodiment of this application, and show one or two C-DRX cycles. In a cell DTX cycle of a serving cell, in a time period of t0' to t1', a DTX state of the serving cell is a periodic active period state, and at a moment t6', the DTX state of the serving cell changes from an inactive period state to the active period state. In the C-DRX cycle of a terminal device, in a time period of t0 to t1, a C-DRX on-duration timer is running, and UE is in a periodic C-DRX active period. It is assumed that no C-DRX inactivity timer is running.

As shown in FIG. 13A, at a moment t2, the UE is scheduled by a base station to perform downlink data transmission, and drx-HARQ-RTT-Timer is started. At a moment t3, drx-HARQ-RTT-Timer expires and stops running, and the C-DRX retransmission timer needs to be started. Because in this case, a cell DTX on-duration timer of the serving cell stops running, or cell DTX of the serving cell is in an inactive period, or cell DTX of the serving cell is not in an active period, the C-DRX retransmission timer is not started or restarted.

Subsequently, at the moment t6', when the DTX state of the serving cell changes from the inactive period state to the active period state or the cell DTX on-duration timer is running, the C-DRX retransmission timer is started or restarted.

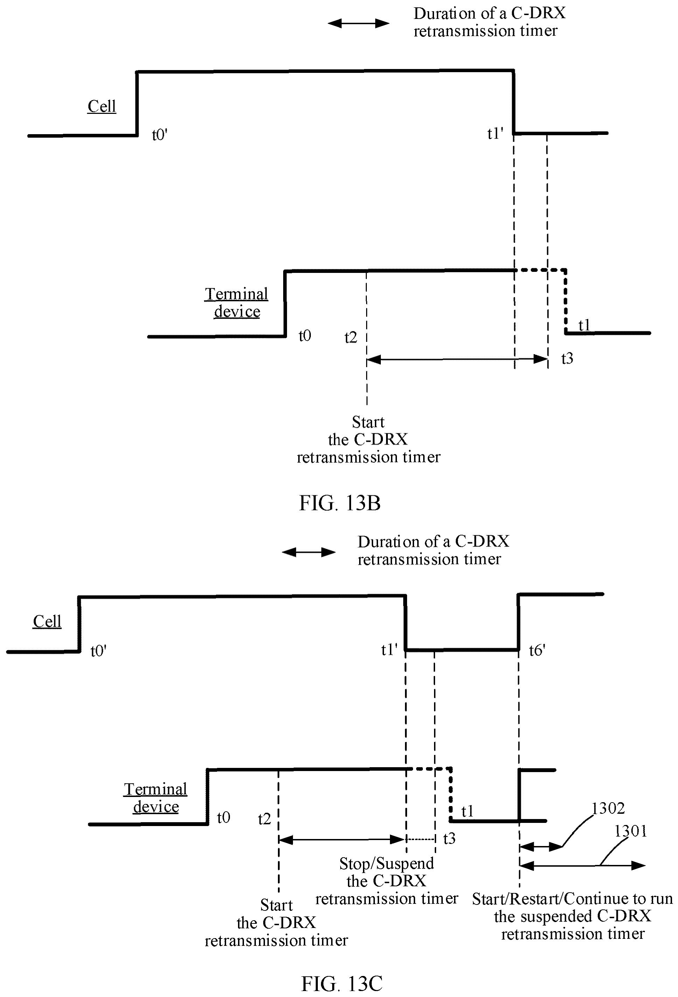

As shown in FIG. 13B and FIG. 13C, at the moment t2, the C-DRX retransmission timer is started. In the time period of t0' to t1', the DTX state of the serving cell is the active period state, and whether the terminal device enters a C-DRX sleep period is determined based on a running state of the C-DRX retransmission timer. Specifically, in a time period of t2 to t1', the cell DTX on-duration timer of the serving cell is running, or cell DTX of the serving cell is in the active period, or cell DTX of the serving cell is not in the inactive period. In addition, the C-DRX retransmission timer is running, and the terminal device is in the C-DRX active period, or the terminal device monitors scheduling information of a PDCCH.

At a moment t1', the cell DTX on-duration timer of the serving cell stops running, or cell DTX of the serving cell is in the inactive period, or cell DTX of the serving cell is not in the active period, and a first operation is performed.

In an example, as shown in FIG. 13B, the first operation indicates the terminal device to enter the C-DRX sleep period. Optionally, the terminal device enters the C-DRX sleep period. Optionally, the terminal device skips monitoring the scheduling information of the PDCCH. In this scenario, the C-DRX retransmission timer continues to run until the moment t3, and the C-DRX retransmission timer expires and stops running.

In another example, as shown in FIG. 13C, the first operation is used to change the running state of the C-DRX retransmission timer.

Optionally, in an implementation, at the moment t1', the C-DRX retransmission timer stops. The terminal device may enter the C-DRX sleep period or skip monitoring the scheduling information of the PDCCH based on the running state of the C-DRX retransmission timer. Subsequently, at the moment t6', when the DTX state of the serving cell changes from the inactive period state to the active period state or the cell DTX on-duration timer is running, the C-DRX retransmission timer is started or restarted. Refer to a number 1301.

Optionally, in another implementation, at the moment t1', the C-DRX retransmission timer is suspended. The terminal device may enter the C-DRX sleep period or skip monitoring the scheduling information of the PDCCH based on the running state of the C-DRX retransmission timer. Subsequently, at the moment t6', the DTX state of the serving cell changes from the inactive period state to the active period state, or the cell DTX on-duration timer is running. Optionally, in an implementation, the C-DRX retransmission timer is started or restarted. Refer to the number 1301. Optionally, in another implementation, the C-DRX retransmission timer that is suspended at the moment t1' continues to run. Refer to a number 1302.

This embodiment relates to the C-DRX retransmission timer. The cell DTX state and the running state of the C-DRX retransmission timer are considered to determine whether the terminal enters the C-DRX sleep period, so that an unnecessary action of monitoring the PDCCH by the terminal device can be avoided, thereby reducing terminal energy consumption.

It may be understood that, to implement the foregoing functions, a communication apparatus includes corresponding hardware and/or software modules for performing the functions. The communication apparatus may include a terminal device and a network device. In combination with algorithm steps in the examples described in embodiments disclosed in this specification, this application can be implemented by hardware or a combination of hardware and computer software. Whether a function is performed by hardware or hardware driven by computer software depends on particular applications and design constraint conditions of the technical solutions. A person skilled in the art may use different methods to implement the described functions with reference to embodiments for each particular application, but it should not be considered that the implementation goes beyond the scope of this application.

In embodiments of this application, the terminal device and the network device may be divided into functional modules based on the foregoing method examples. For example, each functional module may be obtained through division based on each corresponding function, or two or more functions may be integrated into one module. It should be noted that, in embodiments of this application, module division is an example, and is merely logical function division. In actual implementation, another division manner may be used. It should be noted that a name of a module in embodiments of this application is an example. In actual implementation, the name of the module is not limited.

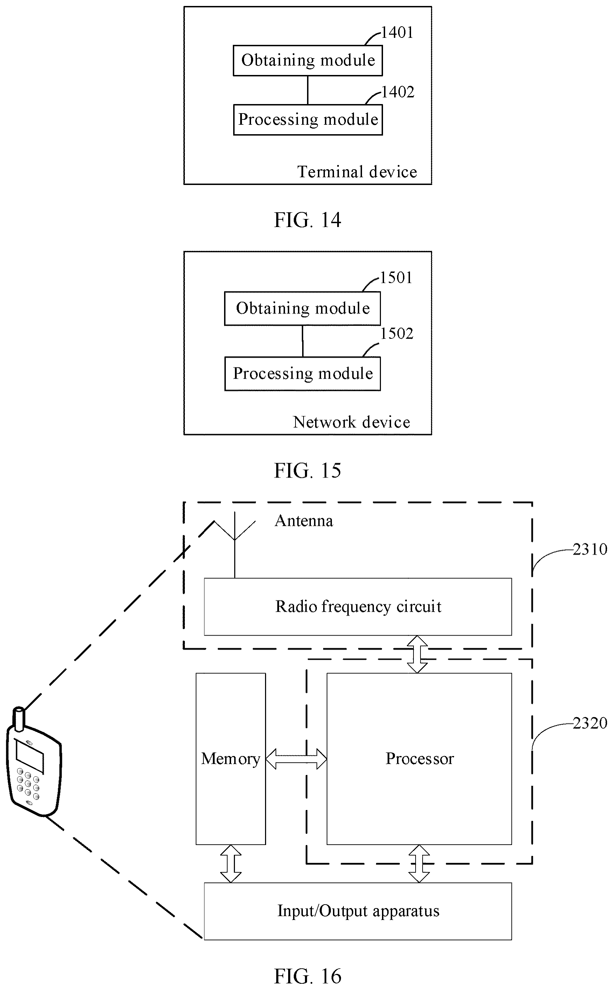

For example, FIG. 14 is a diagram of a structure of a terminal device according to an embodiment of this application. As shown in FIG. 14, the terminal device may include:
an obtaining module 1401, configured to obtain first information and a running state of a timer related to connected discontinuous reception C-DRX, where the first information indicates a cell discontinuous transmission DTX state of a serving cell of the terminal device, and the C-DRX-related timer is configured to determine whether the terminal device enters a C-DRX active period; and
a processing module 1402, configured to: when the first information indicates that the DTX state of the serving cell is an inactive period state, perform a first operation, where the first operation indicates the terminal device to enter a C-DRX sleep period or is used to change the running state of the C-DRX-related timer.

Optionally, the first operation includes any one of the following:
the terminal device enters the C-DRX sleep period;
the terminal device skips monitoring scheduling information of a physical downlink control channel PDCCH;
stopping a running first C-DRX timer;
suspending a running second C-DRX timer; and
when a C-DRX hybrid automatic repeat request round trip time timer stops, skipping starting or skipping restarting a C-DRX retransmission timer.

Optionally, the first operation is stopping the running first C-DRX timer. The processing module 1402 is further configured to:
when the first information indicates that the DTX state of the serving cell changes from the inactive period state to an active period state, start or restart the first C-DRX timer.

Optionally, the first operation is suspending the running second C-DRX timer. The processing module 1402 is further configured to:
when the first information indicates that the DTX state of the serving cell changes from the inactive period state to an active period state, continue to run the suspended second C-DRX timer.

Optionally, the first C-DRX timer includes at least one of the following: a C-DRX on-duration timer, a C-DRX inactivity timer, or a C-DRX retransmission timer.

Optionally, the second C-DRX timer is a C-DRX inactivity timer or a C-DRX retransmission timer.

Optionally, the first operation is: when the C-DRX hybrid automatic repeat request round trip time timer stops, skipping starting or skipping restarting the C-DRX retransmission timer. The processing module 1402 is further configured to:
when the first information indicates that the DTX state of the serving cell changes from the inactive period state to an active period state, start or restart the C-DRX retransmission timer.

Optionally, the obtaining module 1401 is configured to:
determine, based on cell DTX configuration information, whether a cell DTX on-duration timer is running, and/or determine whether DTX of the serving cell is in an inactive period, and/or determine whether DTX of the serving cell is in an active period, to obtain the first information.

Optionally, the first information is that the cell DTX on-duration timer of the serving cell stops running, cell DTX of the serving cell is in the inactive period, or cell DTX of the serving cell is not in the active period, to indicate that the DTX state of the serving cell is the inactive period state. Alternatively, the first information is that the cell DTX on-duration timer of the serving cell is running, cell DTX of the serving cell is in the active period, or cell DTX of the serving cell is not in the inactive period, to indicate that the DTX state of the serving cell is the active period state.

Optionally, the processing module 1402 is further configured to:
when the first information indicates that the DTX state of the serving cell is the active period state, determine, based on the running state of the C-DRX-related timer, whether the terminal device enters the C-DRX sleep period.

The terminal device provided in this embodiment is configured to perform the discontinuous reception method provided in method embodiments of this application. A technical principle and technical effects are similar, and details are not described herein again.

For example, FIG. 15 is a diagram of a structure of a network device according to an embodiment of this application. As shown in FIG. 15, the network device may include:
an obtaining module 1501, configured to obtain first information and a running state of a connected discontinuous reception C-DRX-related timer corresponding to a terminal device, where the first information indicates a cell discontinuous transmission DTX state of a serving cell of the terminal device, and the C-DRX-related timer corresponding to the terminal device is configured to determine whether the terminal device enters a C-DRX active period; and
a processing module 1502, configured to: when the first information indicates that the DTX state of the serving cell is an inactive period state, perform a first operation, where the first operation indicates the terminal device to enter a C-DRX sleep period or is used to change the running state of the C-DRX-related timer corresponding to the terminal device.

Optionally, the first operation includes any one of the following:
the terminal device enters the C-DRX sleep period;
the terminal device skips monitoring scheduling information of a physical downlink control channel PDCCH;
stopping a running first C-DRX timer corresponding to the terminal device;
suspending a running second C-DRX timer corresponding to the terminal device; and
when a C-DRX hybrid automatic repeat request round trip time timer corresponding to the terminal device stops, skipping starting or skipping restarting a C-DRX retransmission timer corresponding to the terminal device.

Optionally, the first operation is stopping the running first C-DRX timer corresponding to the terminal device. The processing module 1502 is further configured to:
when the first information indicates that the DTX state of the serving cell changes from the inactive period state to an active period state, start or restart the first C-DRX timer corresponding to the terminal device.

Optionally, the first operation is suspending the running second C-DRX timer corresponding to the terminal device. The processing module 1502 is further configured to:
when the first information indicates that the DTX state of the serving cell changes from the inactive period state to an active period state, continue to run the suspended second C-DRX timer corresponding to the terminal device.

Optionally, the first C-DRX timer includes at least one of the following: a C-DRX on-duration timer, a C-DRX inactivity timer, or a C-DRX retransmission timer.

Optionally, the second C-DRX timer is a C-DRX inactivity timer or a C-DRX retransmission timer.

Optionally, the first operation is: when the C-DRX hybrid automatic repeat request round trip time timer corresponding to the terminal device stops, skipping starting or skipping restarting the C-DRX retransmission timer corresponding to the terminal device. The processing module 1502 is further configured to:
when the first information indicates that the DTX state of the serving cell changes from the inactive period state to an active period state, start or restart the C-DRX retransmission timer corresponding to the terminal device.

Optionally, the obtaining module 1501 is configured to:
determine, based on cell DTX configuration information, whether a cell DTX on-duration timer of the serving cell is running, and/or determine whether DTX of the serving cell is in an inactive period, and/or determine whether DTX of the serving cell is in an active period, to obtain the first information.

Optionally, the first information is that the cell DTX on-duration timer of the serving cell stops running, cell DTX of the serving cell is in the inactive period, or cell DTX of the serving cell is not in the active period, to indicate that the DTX state of the serving cell is the inactive period state. Alternatively, the first information is that the cell DTX on-duration timer of the serving cell is running, cell DTX of the serving cell is in the active period, or cell DTX of the serving cell is not in the inactive period, to indicate that the DTX state of the serving cell is the active period state.

Optionally, the processing module 1502 is further configured to:
when the first information indicates that the DTX state of the serving cell is the active period state, determine, based on the running state of the C-DRX-related timer corresponding to the terminal device, whether the terminal device enters the C-DRX sleep period.

The network device provided in this embodiment is configured to perform the discontinuous reception method provided in method embodiments of this application. A technical principle and technical effects are similar, and details are not described herein again.

When the communication apparatus is a terminal device, FIG. 16 is a diagram of another structure of a terminal device according to an embodiment of this application. For ease of understanding and illustration, an example in which the terminal device is a mobile phone is used in FIG. 16. As shown in FIG. 16, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store the software program and data. The radio frequency circuit is mainly configured to perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to receive data input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 16 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In embodiments of this application, the antenna and the radio frequency circuit that have a transceiver function may be considered as a transceiver unit of the terminal device (the transceiver unit may be one functional unit, and the functional unit can implement a sending function and a receiving function; or the transceiver unit may include two functional units: a receiving unit that can implement a receiving function and a sending unit that can implement a sending function), and the processor having a processing function may be considered as a processing unit of the terminal device. As shown in FIG. 16, the terminal device includes a transceiver unit 2310 and a processing unit 2320. The transceiver unit may also be referred to as a transceiver, a transceiver machine, a transceiver apparatus, or the like. The processing unit may also be referred to as a processor, a processing board, a processing module, a processing apparatus, or the like. Optionally, a component that is in the transceiver unit 2310 and that is configured to implement a receiving function may be considered as a receiving unit, and a component that is in the transceiver unit 2310 and that is configured to implement a sending function may be considered as a sending unit. In other words, the transceiver unit 2310 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that the transceiver unit 2310 is configured to perform a sending operation and a receiving operation of the terminal device in the foregoing method embodiments, and the processing unit 2320 is configured to perform an operation other than the receiving and sending operations on the terminal device in the foregoing method embodiments.

When the communication apparatus is a chip-type apparatus or circuit, the apparatus may include a transceiver unit and a processing unit. The transceiver unit may be an input/output circuit and/or a communication interface. The processing unit is an integrated processor, a microprocessor, or an integrated circuit.

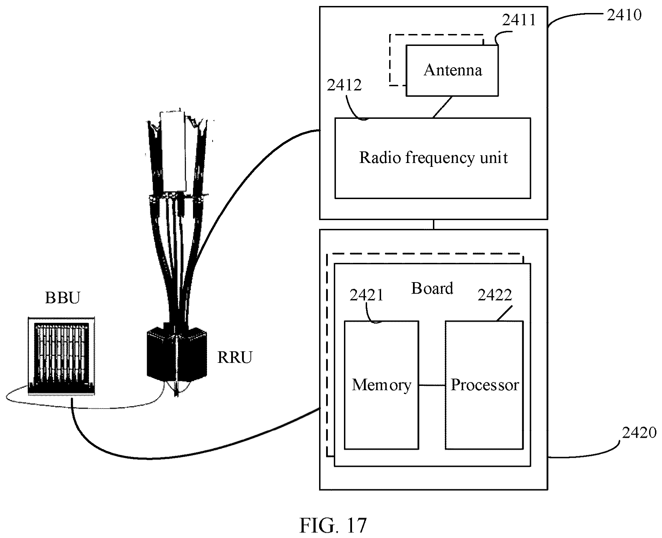

When the apparatus in embodiments of this application is a network device, the apparatus may be shown in FIG. 17. The apparatus may include one or more radio frequency units, such as a remote radio unit (remote radio unit, RRU) 2410 and one or more baseband units (baseband units, BBUs) (which may also be referred to as digital units (digital units, DUs)) 2420. The RRU 2410 may be referred to as a transceiver module. The transceiver module may include a sending module and a receiving module, or the transceiver module may be one module that can implement sending and receiving functions. Optionally, the transceiver module may also be referred to as a transceiver machine, a transceiver circuit, a transceiver, or the like, and may include at least one antenna 2411 and a radio frequency unit 2412. The RRU 2410 is mainly configured to: receive and send radio frequency signals, and perform conversion between a radio frequency signal and a baseband signal. The BBU 2420 is mainly configured to: perform baseband processing, control a base station, and the like. The RRU 2410 and the BBU 2420 may be physically disposed together, or may be physically separated, that is, a distributed base station.

The BBU 2420 is a control center of the base station, may also be referred to as a processing module, and is mainly configured to implement baseband processing functions such as channel coding, multiplexing, modulation, and spectrum spreading. For example, the BBU (processing module) may be configured to control the base station to perform an operation procedure related to the network device in the foregoing method embodiments.

In an example, the BBU 2420 may include one or more boards. A plurality of boards may jointly support a radio access network (for example, an LTE network) of a single access standard, or may separately support radio access networks (such as, an LTE network, a 5G network, or another network) with different access standards. The BBU 2420 further includes a memory 2421 and a processor 2422. The memory 2421 is configured to store necessary instructions and data. The processor 2422 is configured to control the base station to perform a necessary action, for example, is configured to control the base station to perform an operation procedure related to the network device in the foregoing method embodiments. The memory 2421 and the processor 2422 may serve one or more boards. In other words, a memory and a processor may be disposed on each board. Alternatively, a plurality of boards may share a same memory and a same processor. In addition, a necessary circuit may further be disposed on each board.

An embodiment of this application further provides a communication system. The communication system may include a terminal device and a network device. Optionally, the terminal device and the network device in the communication system may perform the discontinuous reception method provided in the method embodiments of this application.

An embodiment of this application further provides a computer-readable storage medium. The computer-readable storage medium stores a computer program. When the computer program is executed by a computer, the computer may implement a procedure related to the terminal device or the network device in any one of the foregoing method embodiments.

An embodiment of this application further provides a computer program product. The computer program product is configured to store a computer program. When the computer program is executed by a computer, the computer may implement a procedure related to the terminal device or the network device in any one of the foregoing method embodiments.

An embodiment of this application further provides a chip or a chip system. The chip may include a processor, and the processor may be configured to invoke a program or instructions in a memory, to perform a procedure related to the terminal device or the network device in any one of the foregoing method embodiments. The chip system may include the chip, and may further include another component, for example, a memory or a transceiver.

An embodiment of this application further provides a circuit. The circuit may be coupled to a memory, and may be configured to perform a procedure related to the terminal device or the network device in any one of the foregoing method embodiments. The chip system may include a chip, and may further include another component, for example, a memory or a transceiver.

It should be understood that the processor mentioned in embodiments of this application may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be understood that the memory mentioned in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) is integrated into the processor.

It should be noted that the memory described in this specification is intended to include but is not limited to these memories and any other suitable type of memories.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, modules and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments. Details are not described herein again.

In the several embodiments provided in this application, it should be understood that the disclosed discontinuous reception method and apparatus may be implemented in other manners. For example, the foregoing described apparatus embodiments are merely examples. For example, the module division is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The modules described as separate components may or may not be physically separate, and components displayed as modules may or may not be physical modules, that is, may be located in one position or may be distributed over a plurality of network units. Some or all of the units may be selected based on actual requirements to achieve the objectives of the solutions of embodiments.

In addition, functional modules in embodiments of this application may be integrated into one processing module, or each of the modules may exist alone physically, or two or more modules may be integrated into one module.

When the functions are implemented in a form of a software functional module and sold or used as an independent product, the functions may be stored in a computer-readable storage medium. Based on such an understanding, the technical solutions of this application essentially, or a part making contributions, or some of the technical solutions may be implemented in a form of a software product. A computer software product is stored in a storage medium and includes several instructions for instructing a computer device (which may be a personal computer, a server, a network device, or the like) to perform all or some of the steps of the methods in embodiments of this application. The computer-readable storage medium may be any usable medium that can be accessed by a computer. The following provides an example but does not impose a limitation: The computer-readable medium may include a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, or another optical disc storage, a disk storage medium or another magnetic storage device, or any other medium that can be used to carry or store expected program code in a form of an instruction or a data structure and that can be accessed by a computer.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

## Claims

1. A discontinuous reception method, applied to a terminal device, wherein the method comprises:
obtaining first information and a running state of a connected discontinuous reception C-DRX-related timer, wherein the first information indicates a cell discontinuous transmission DTX state of a serving cell of the terminal device, and the C-DRX-related timer is configured to determine whether the terminal device enters a C-DRX active period; and
when the first information indicates that the DTX state of the serving cell is an inactive period state, performing a first operation, wherein the first operation indicates the terminal device to enter a C-DRX sleep period or is used to change the running state of the C-DRX-related timer.

2. The method according to claim 1, wherein the first operation comprises any one of the following:
the terminal device enters the C-DRX sleep period;
the terminal device skips monitoring scheduling information of a physical downlink control channel PDCCH;
stopping a running first C-DRX timer;
suspending a running second C-DRX timer; and
when a C-DRX hybrid automatic repeat request round trip time timer stops, skipping starting or skipping restarting a C-DRX retransmission timer.

3. The method according to claim 2, wherein the first operation is stopping the running first C-DRX timer, and the method further comprises:
when the first information indicates that the DTX state of the serving cell changes from the inactive period state to an active period state, starting or restarting the first C-DRX timer.

4. The method according to claim 2, wherein the first operation is suspending the running second C-DRX timer, and the method further comprises:
when the first information indicates that the DTX state of the serving cell changes from the inactive period state to an active period state, continuing to run the suspended second C-DRX timer.

5. The method according to any one of claims 2 to 4, wherein the first C-DRX timer comprises at least one of the following: a C-DRX on-duration timer, a C-DRX inactivity timer, or a C-DRX retransmission timer.

6. The method according to any one of claims 2 to 4, wherein the second C-DRX timer is a C-DRX inactivity timer or a C-DRX retransmission timer.

7. The method according to claim 2, wherein the first operation is: when the C-DRX hybrid automatic repeat request round trip time timer stops, skipping starting or skipping restarting the C-DRX retransmission timer, and the method further comprises:
when the first information indicates that the DTX state of the serving cell changes from the inactive period state to an active period state, starting or restarting the C-DRX retransmission timer.

8. The method according to any one of claims 1 to 7, wherein the obtaining the first information comprises:
determining, based on cell DTX configuration information, whether a cell DTX on-duration timer is running, and/or determining whether DTX of the serving cell is in an inactive period, and/or determining whether DTX of the serving cell is in an active period, to obtain the first information.

9. The method according to any one of claims 1 to 8, wherein
the first information is that the cell DTX on-duration timer of the serving cell stops running, cell DTX of the serving cell is in the inactive period, or cell DTX of the serving cell is not in the active period, to indicate that the DTX state of the serving cell is the inactive period state; or
the first information is that the cell DTX on-duration timer of the serving cell is running, cell DTX of the serving cell is in the active period, or cell DTX of the serving cell is not in the inactive period, to indicate that the DTX state of the serving cell is the active period state.

10. The method according to any one of claims 1 to 9, wherein the method further comprises:
when the first information indicates that the DTX state of the serving cell is the active period state, determining, based on the running state of the C-DRX-related timer, whether the terminal device enters the C-DRX sleep period.

11. A discontinuous reception method, applied to a network device, wherein the method comprises:
obtaining first information and a running state of a connected discontinuous reception C-DRX-related timer corresponding to a terminal device, wherein the first information indicates a cell discontinuous transmission DTX state of a serving cell of the terminal device, and the C-DRX-related timer corresponding to the terminal device is configured to determine whether the terminal device enters a C-DRX active period; and
when the first information indicates that the DTX state of the serving cell is an inactive period state, performing a first operation, wherein the first operation indicates the terminal device to enter a C-DRX sleep period or is used to change the running state of the C-DRX-related timer corresponding to the terminal device.

12. The method according to claim 11, wherein the first operation comprises any one of the following:
the terminal device enters the C-DRX sleep period;
the terminal device skips monitoring scheduling information of a physical downlink control channel PDCCH;
stopping a running first C-DRX timer corresponding to the terminal device;
suspending a running second C-DRX timer corresponding to the terminal device; and
when a C-DRX hybrid automatic repeat request round trip time timer corresponding to the terminal device stops, skipping starting or skipping restarting a C-DRX retransmission timer corresponding to the terminal device.

13. The method according to claim 12, wherein the first operation is stopping the running first C-DRX timer corresponding to the terminal device, and the method further comprises:
when the first information indicates that the DTX state of the serving cell changes from the inactive period state to an active period state, starting or restarting the first C-DRX timer corresponding to the terminal device.

14. The method according to claim 12, wherein the first operation is suspending the running second C-DRX timer corresponding to the terminal device, and the method further comprises:
when the first information indicates that the DTX state of the serving cell changes from the inactive period state to an active period state, continuing to run the suspended second C-DRX timer corresponding to the terminal device.

15. The method according to any one of claims 12 to 14, wherein the first C-DRX timer comprises at least one of the following: a C-DRX on-duration timer, a C-DRX inactivity timer, or a C-DRX retransmission timer.

16. The method according to any one of claims 12 to 14, wherein the second C-DRX timer is a C-DRX inactivity timer or a C-DRX retransmission timer.

17. The method according to claim 12, wherein the first operation is: when the C-DRX hybrid automatic repeat request round trip time timer corresponding to the terminal device stops, skipping starting or skipping restarting the C-DRX retransmission timer corresponding to the terminal device, and the method further comprises:
when the first information indicates that the DTX state of the serving cell changes from the inactive period state to an active period state, starting or restarting the C-DRX retransmission timer corresponding to the terminal device.

18. The method according to any one of claims 11 to 17, wherein the obtaining the first information comprises:
determining, based on cell DTX configuration information, whether a cell DTX on-duration timer of the serving cell is running, and/or determining whether DTX of the serving cell is in an inactive period, and/or determining whether DTX of the serving cell is in an active period, to obtain the first information.

19. The method according to any one of claims 11 to 18, wherein
the first information is that the cell DTX on-duration timer of the serving cell stops running, cell DTX of the serving cell is in the inactive period, or cell DTX of the serving cell is not in the active period, to indicate that the DTX state of the serving cell is the inactive period state; or
the first information is that the cell DTX on-duration timer of the serving cell is running, cell DTX of the serving cell is in the active period, or cell DTX of the serving cell is not in the inactive period, to indicate that the DTX state of the serving cell is the active period state.

20. The method according to any one of claims 11 to 19, wherein the method further comprises:
when the first information indicates that the DTX state of the serving cell is the active period state, determining, based on the running state of the C-DRX-related timer corresponding to the terminal device, whether the terminal device enters the C-DRX sleep period.

21. A communication apparatus, comprising a module configured to perform the method according to any one of claims 1 to 10 or claims 11 to 20.

22. A communication apparatus, comprising a processor and a communication interface, wherein the communication interface is configured to receive a signal from another communication apparatus other than the communication apparatus and transmit the signal to the processor, or send a signal from the processor to another communication apparatus other than the communication apparatus; and the processor is configured to implement the method according to any one of claims 1 to 10 or claims 11 to 20 by using a logic circuit or by executing code instructions.

23. A computer-readable storage medium, wherein the computer-readable storage medium stores a computer program, and when the computer program is run, the method according to any one of claims 1 to 10 or claims 11 to 20 is implemented.

24. A computer program product, wherein the computer program product comprises computer program code, and when the computer program code is run, the method according to any one of claims 1 to 10 or claims 11 to 20 is implemented.
